# EUROPEAN PATENT APPLICATION

(11) **EP 4 579 419 A1**
(43) Date of publication of application: **02.07.2025**
(21) Application number: 23872784.6
(22) Date of filing: 09.08.2023
(51) Int. Cl.: G06F 3/04842, G06F 3/0482, G06F 3/04817, H04L 12/28, G16Y 40/30, H04L 67/131, G16Y 10/80

(54) **ELECTRONIC DEVICE AND OPERATION METHOD THEREOF**

(30) Priority: 30.09.2022 KR 20220125412; 13.12.2022 KR 20220174180
(71) Applicant: Samsung Electronics Co., Ltd., Suwon-si, Gyeonggi-do 16677 (KR)
(72) Inventor: SHIN, Seungsu, Suwon-si, Gyeonggi-do 16677 (KR)
(74) Representative: Appleyard Lees IP LLP
(86) International application number: PCT/KR2023/011769
(87) International publication number: WO 2024/071661

(57) **Abstract**

Provided are an electronic device and an operation method of the electronic device. The electronic device includes a communication interface, a display, a memory storing one or more instructions, and at least one processor configured to execute the one or more instructions stored in the memory. The at least one processor may display content including an avatar on the display, by executing the one or more instructions stored in the memory. The at least one processor may display, around the avatar, a virtual object management user interface (UI) for managing virtual objects corresponding to Internet of Things (IoT) apparatuses, by executing the one or more instructions stored in the memory. The at least one processor may display an activated virtual object management UI, based on a user's input for the virtual object management UI, by executing the one or more instructions stored in the memory. The at least one processor may obtain status information from the IoT apparatuses through the communication interface, when the virtual object management UI includes a notification UI, by executing the one or more instructions stored in the memory.

## Description

### Technical Field

The present disclosure relates to an electronic device and an operation method of the electronic device, and more particularly, to an electronic device capable of displaying a virtual object in a virtual space, and an operation method of the electronic device.

### Background Art

Recently, interest has been growing in a next-generation media environment that allows users to experience content in a virtual space similar to a real space. In particular, the metaverse is in the spotlight as a representative service that provides a virtual space to users. The metaverse, which is a compound word of meta meaning fiction or abstraction, and universe meaning a real world, refers to a three-dimensional (3D) virtual world. The core technology of this metaverse is extended reality (XR) technology which encompasses virtual reality (VR), augmented reality (AR), and mixed reality (MR).

There are various methods of implementing a virtual space, but they all commonly use virtual 3D images to interact with users in a real space in real time.

Due to development of information and communication technology, Internet of Things (IoT) technology is becoming popular, and accordingly, the number of IoT apparatuses that need to be controlled is increasing. According to a conventional IoT apparatus control method, users usually use a user interface (UI) provided mainly through an app or the web.

As the metaverse environment expands, users are able to perform various activities through avatars that project themselves into the virtual space. Accordingly, technology capable of controlling IoT apparatuses in the virtual space is required.

### Disclosure of Invention

### Solution to Problem

According to an aspect of the present disclosure, an electronic device includes a communication interface, a display, a memory storing one or more instructions, and at least one processor configured to execute the one or more instructions stored in the memory. The at least one processor may display content including an avatar on the display, by executing the one or more instructions stored in the memory. The at least one processor may display, around the avatar, a virtual object management user interface (UI) for managing virtual objects corresponding to Internet of Things (IoT) apparatuses, by executing the one or more instructions stored in the memory. The at least one processor may display an activated virtual object management UI, based on a user's input for the virtual object management UI, by executing the one or more instructions stored in the memory. The at least one processor may obtain status information from the IoT apparatuses through the communication interface, when the virtual object management UI includes a notification UI, by executing the one or more instructions stored in the memory.

According to an aspect of the present disclosure, a server device includes a communication interface, a memory storing one or more instructions, and at least one processor configured to execute the one or more instructions stored in the memory. The at least one processor may transmit content including an avatar to an electronic device through the communication interface, by executing the one or more instructions. The at least one processor may generate, around the avatar, a virtual object management UI for managing virtual objects corresponding to IoT apparatuses, by executing the one or more instructions. The at least one processor may activate the virtual object management UI, based on an input signal for the virtual object management UI, by executing the one or more instructions.

According to an aspect of the present disclosure, an operation method of an electronic device includes displaying content including an avatar on a display, displaying, around the avatar, a virtual object management UI for managing virtual objects corresponding to IoT apparatuses, displaying an activated virtual object management UI, based on a user's input for the virtual object management UI, and obtaining status information from the IoT apparatuses through the communication interface, when the virtual object management UI includes a notification UI.

### Brief Description of Drawings

FIG. 1 is a diagram illustrating a virtual space providing system that reflects a real space, according to an embodiment.
FIG. 2 is a flowchart of an operation, performed by an electronic device according to an embodiment, of providing a virtual space that reflects a real space.
FIG. 3 is a diagram illustrating an operation, performed by an electronic device according to an embodiment, of providing a virtual space that reflects a real space.
FIG. 4 is a flowchart of an operation, performed by a virtual space provision system according to an embodiment, of displaying a notification user interface (UI) regarding status information of an Internet of Things (IoT) apparatus.
FIG. 5 is a diagram illustrating an operation, performed by a virtual space provision system according to an embodiment, of displaying a notification **UI** regarding status information of an IoT apparatus.
FIG. 6A is a diagram illustrating an operation, performed by a virtual space provision system according to an embodiment, of displaying a notification **UI** regarding status information of an IoT apparatus.
FIG. 6B is a diagram illustrating an operation, performed by a virtual space provision system according to an embodiment, of displaying a notification **UI** regarding status information of an IoT apparatus.
FIG. 7 is a flowchart of an operation, performed by a virtual space provision system according to an embodiment, of displaying a control **UI** for controlling **an** IoT apparatus.
FIG. 8 is a flowchart of an operation, performed by a virtual space provision system according to an embodiment, of displaying a control **UI** for controlling **an** IoT apparatus.
FIG. 9 is a diagram illustrating an operation, performed by a virtual space provision system according to an embodiment, of displaying a control **UI** for controlling **an** IoT apparatus.
FIG. 10 is a diagram illustrating an operation, performed by a virtual space provision system according to an embodiment, of displaying a virtual object list UI.
FIG. 11 is a diagram illustrating an operation, performed by a virtual space provision system according to an embodiment, of displaying a control **UI** for controlling an IoT apparatus.
FIG. 12 is a diagram illustrating an operation, performed by a virtual space provision system according to an embodiment, of displaying a control UI for controlling an IoT apparatus.
FIG. 13 is a block diagram of a structure of an electronic device according to an embodiment.
FIG. 14 is a detailed block diagram of a structure of an electronic device according to an embodiment.
FIG. 15 is a block diagram of a structure of a server device according to an embodiment.
FIG. 16 is a block diagram of a structure of an electronic device according to an embodiment.

### Mode for Invention

Throughout the present disclosure, the expression "at least one of a, b or c" indicates only a, only b, only c, both a and b, both a and c, both b and c, all of a, b, and c, or variations thereof.

Embodiments of the present disclosure are described in detail herein with reference to the accompanying drawings so that the present disclosure may be easily performed by one of ordinary skill in the art to which the present disclosure pertains. The present disclosure may, however, be embodied in many different forms and should not be construed as being limited to the examples set forth herein.

Although general terms widely used at present were selected for describing the present disclosure in consideration of the functions thereof, these general terms may vary according to intentions of one of ordinary skill in the art, case precedents, the advent of new technologies, and the like. Hence, the terms must be defined based on their meanings and the contents of the entire specification, not by simply stating the terms.

The terms used in the present disclosure are merely used to describe particular embodiments, and are not intended to limit the scope of the present disclosure.

The terms "comprises" and/or "comprising" or "includes" and/or "including" when used in this specification, specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

The present disclosure will now be described more fully with reference to the accompanying drawings, in which exemplary embodiments of the present disclosure are shown. The present disclosure may, however, be embodied in many different forms and should not be construed as being limited to the embodiments set forth herein. In the drawings, parts irrelevant to the description are omitted for the simplicity of explanation, and like numbers refer to like elements throughout.

The term "user" used herein denotes a person who controls a system, a function, or an operation. Examples of the user may include an inventor, a manager, or an installation engineer.

Embodiments of the present disclosure will now be described more fully with reference to the accompanying drawings.

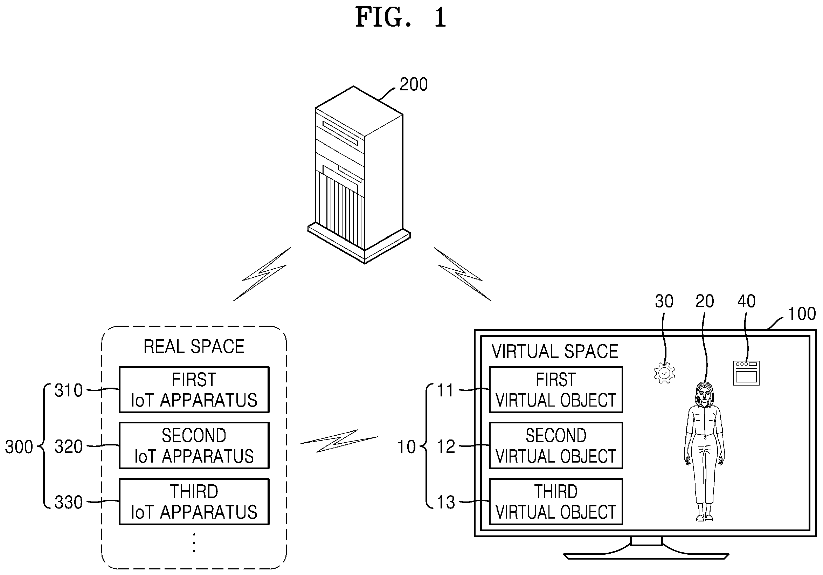

FIG. 1 is a diagram illustrating a virtual space providing system that reflects a real space, according to an embodiment.

Referring to FIG. 1, the virtual space providing system according to an embodiment may include an electronic device 100, a server device 200, and an Internet of Things (IoT) apparatus 300.

The electronic device 100 may be an electronic device capable of outputting an image. According to an embodiment, the electronic device 100 may be implemented as any of various types of electronic devices including displays. The electronic device 100 may be fixed or movable, and may be, but is not limited to, a digital TV capable of digital broadcasting reception.

The electronic device 100 may include at least one of a desktop personal computer (PC), a smartphone, a tablet PC, a mobile phone, a video phone, an e-book reader, a laptop PC, a netbook computer, a digital camera, a personal digital assistant (PDA), a portable multimedia player (PMP), a camcorder, a navigation wearable device, a smart watch, a home network system, a security system, or a medical device.

The electronic device 100 may be implemented as not only a flat display apparatus but also a curved display apparatus having a curvature or a flexible display apparatus with an adjustable curvature. An output resolution of the electronic device 100 may include any of various resolutions such as a high definition (HD), a full **HD,** an ultra **HD,** or a resolution that is clearer than an ultra HD.

According to an embodiment, the electronic device 100 may output various types of content. The electronic device 100 may receive and output virtual space content provided by the server device 200. For example, the server device 200 may generate the virtual space content, and transmit the virtual space content to the electronic device 100 through a communication network. For example, the server device 200 may generate an avatar 20 corresponding to a user of the electronic device 100 in the virtual space content, and transmit the avatar 20 to the electronic device 100. The electronic device 100 may display the virtual space content including the avatar 20 corresponding to the user on a display. Alternatively, the electronic device 100 according to an embodiment may generate and output the virtual space content by executing an application installed in the electronic device 100.

The server device 200 generates the virtual space content, and provides the virtual space content so that users of various clients may access the virtual space content. The server device 200 may generate and provide avatars reflecting the users of the various clients. The server device 200 may provide the virtual space content to the electronic device 100, which is an example of a client, and may manage coordinates of an object (e.g., an avatar) within the virtual space in response to an interaction of a user of the electronic device 100. Accordingly, a user in the real space and an object in the virtual space may interact with each other.

The IoT apparatus 300 may be a general device (or thing) that performs wired or wireless communication. For example, the IoT apparatus 300 may include a refrigerator, an air conditioner, a CCTV, a TV, a washing machine, a vacuum cleaner, an oven, a dehumidifier, a lamp, a fire alarm, and a temperature or humidity sensor. However, embodiments are not limited thereto. The IoT apparatus 300 may include a plurality of IoT apparatuses, including a first IoT apparatus 310, a second IoT apparatus 320, a third IoT apparatus 330, etc. The IoT apparatus 300 is used herebelow to mean including at least one IoT apparatus.

According to an embodiment, the IoT apparatus 300 may be registered in the server device 200 by transmitting apparatus information of the IoT apparatus 300 and the user's account information to the server device 200. For example, the apparatus information of the IoT apparatus 300 may include a model name, a serial number, a control function, etc. of the IoT apparatus 300. The model name and serial number of the IoT apparatus 300 may be information for identifying one of an appearance, a type, and a control function of the IoT apparatus 300.

According to an embodiment, the server device 200 may generate the IoT apparatus 300 in a real space as a virtual object 10 in a virtual space. The server device 200 may transmit the generated virtual object 10 to the electronic device 100, and the electronic device 100 may display the virtual object 10 together with the virtual space content. For example, the server device 200 may transmit the virtual object 10 corresponding to the IoT apparatus 300 to the electronic device 100 connected to the same account as the IoT apparatus 300 registered in the server device 200.

In this case, the virtual object 10 may have the appearance and/or control function of the IoT apparatus 300. The virtual object 10 may have an appearance that replicates the IoT apparatus 300 by considering the apparatus information of the IoT apparatus 300, such as the model name and the serial number, and may also have an appearance that is predetermined according to the type of the IoT apparatus 300. Accordingly, the virtual object 10 may be referred to as a duplicate thing or twin thing of an actual IoT apparatus, because the virtual object 10 has a similar appearance or function to the actual IoT apparatus. For example, the virtual object 10 may have an appearance and/or control function of a refrigerator, an air conditioner, a CCTV, a TV, a washing machine, a vacuum cleaner, an oven, a dehumidifier, a lamp, a fire alarm, a temperature or humidity sensor, etc.

According to an embodiment, the electronic device 100 may display the virtual object 10 located in the virtual space. The virtual object 10 may include a plurality of the virtual objects, including a first virtual object 11, a second virtual object 12, a third virtual object 13, etc. The virtual object 10 is used herebelow to mean including at least one the virtual object.

According to an embodiment, the electronic device 100 may display virtual object management user interfaces (Uls) 30 and 40 around the avatar 20. The virtual object management Uls 30 and 40 may include a notification UI 40 indicating a notification about status information of the IoT apparatus 300 and a control UI 30 receiving an input from a user controlling the IoT apparatus 300.

According to an embodiment, the electronic device 100 may display the notification UI 40 regarding the status information of the IoT apparatus 300 on the display. The user may monitor the status information of the IoT apparatus 300 in the real space through the electronic device 100. For example, the IoT apparatus 300 may transmit the apparatus information and the status information to the electronic device 100. The IoT apparatus 300 may be connected to the electronic device 100 wirelessly or by wire, or may be connected through the server device 200. For example, the electronic device 100 may obtain the apparatus information and the status information from the IoT apparatus 300, and transmit the apparatus information and the status information to the server device 200. The server device 200 may receive the apparatus information and the status information of the IoT apparatus 300, and generate the virtual object 10 having the appearance and/or control function of the IoT apparatus 300. The server device 200 may generate the notification UI 40 as a virtual object management UI for managing the virtual object 10 corresponding to the IoT apparatus 300. The server device 200 may generate the notification UI 40 around the avatar 20. The server device 200 may transmit the avatar 20 and the notification UI 40 around the avatar 20 while transmitting the virtual space content to the electronic device 100. Accordingly, the electronic device 100 may display the virtual space content, the avatar 20, and the notification UI 40 around the avatar 20 on the display.

According to an embodiment, the electronic device 100 may display the control UI 30 for controlling the IoT apparatus 300, on the display. The user may control the IoT apparatus 300 of the real space through the virtual object 10 and a UI related to the virtual object 10 both displayed on the electronic device 100. For example, the electronic device 100 may display the control UI 30 around the avatar 20. The user may input what IoT apparatus 300 to control through the control UI 30 and how to set an operation of the IoT apparatus 300, and the electronic device 100 may receive input signals regarding information of the IoT apparatus 300 and operation information of the IoT apparatus 300. The electronic device 100 may transmit the information of the IoT apparatus 300 and a set operation of the IoT apparatus 300 to the server device 200. The server device 200 may generate a control command capable of controlling the IoT apparatus 300, according to the information of the IoT apparatus 300 and the set operation of the IoT apparatus 300. The server device 200 may transmit the control command to the IoT apparatus 300 via the electronic device 100, or may transmit the control command directly to the IoT apparatus 300.

According to an embodiment, the server device 200 is illustrated as being a device that manages the IoT apparatus 300 while providing the virtual space content to the electronic device 100. However, embodiments are not limited thereto. For example, the server device 200 may include a first server device that provides the virtual space content to the electronic device 100, and a second server device that manages the IoT apparatus 300.

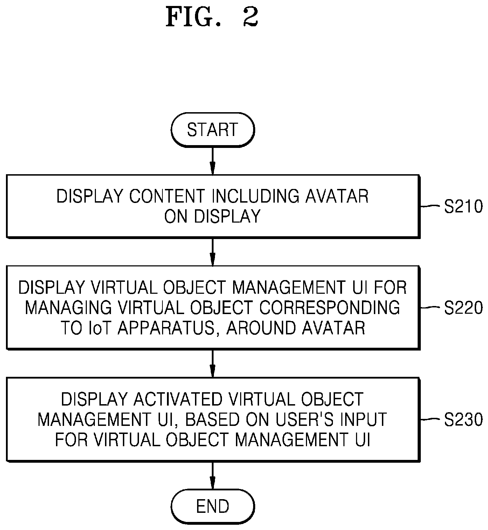

FIG. 2 is a flowchart of an operation, performed by an electronic device according to an embodiment, of providing a virtual space that reflects a real space.

Referring to FIG. 2, in operation S210, the electronic device 100 according to an embodiment may display content including an avatar on a display. For example, the electronic device 100 may display the virtual space content.

In operation S220, the electronic device 100 according to an embodiment may display a virtual object management UI for managing a virtual object corresponding to the IoT apparatus 300, around the avatar. For example, the electronic device 100 may display the virtual object corresponding to the IoT apparatus 300 on the display. For example, the virtual object management UI may include a notification UI for notifying the status information of the IoT apparatus 300, or may include a control UI for controlling the IoT apparatus 300. The electronic device 100 may display the notification UI or the control UI around the avatar.

In operation S230, the electronic device 100 according to an embodiment may display an activated virtual object management UI, based on a user's input for the virtual object management UI. For example, an inactivated virtual object management UI may have a first state, and the activated virtual object management UI may have a second state. For example, when the electronic device 100 obtains the user's input for the virtual object management UI, the electronic device 100 may display the virtual object management UI displayed in the first state, in the second state. For example, the first state may be a translucent state, a black and white state, a dotted line state, a thin line state, etc., and the second state may be an opaque state, a colored state, a solid line state, a thick line state, etc.

The electronic device 100 according to an embodiment may display the virtual space content, and may change and display the virtual object management UI in real time by interacting with the user.

The electronic device 100 according to an embodiment may display the status information of the IoT apparatus 300 by reflecting the status information of the IoT apparatus 300 in a virtual object, or may control the IoT apparatus 300 by reflecting a control input for the virtual object in the IoT apparatus 300.

The electronic device 100 according to an embodiment may conveniently manage a virtual object of a virtual space and an IoT apparatus of a real space, by manipulating a virtual object management UI displayed around an avatar corresponding to the user, without moving the avatar to a place where the virtual object is located.

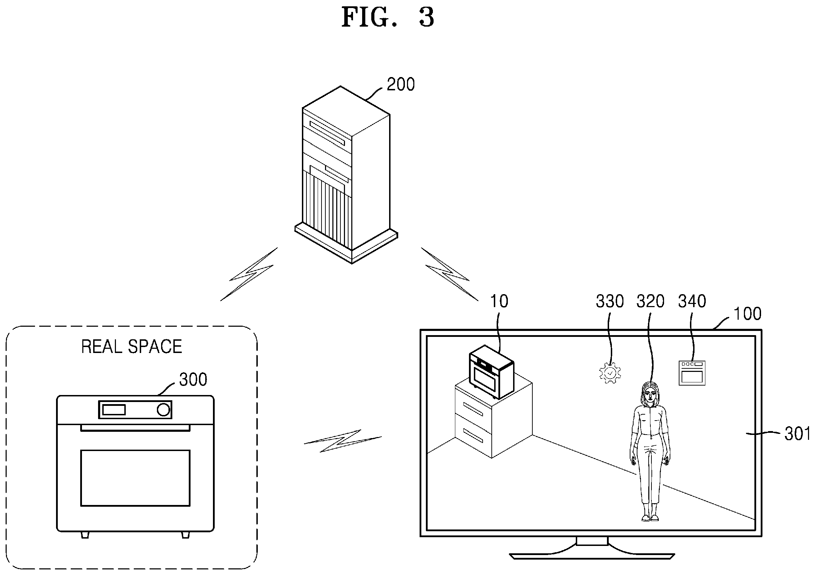

FIG. 3 is a diagram illustrating an operation, performed by an electronic device according to an embodiment, of providing a virtual space that reflects a real space.

An example in which the electronic device 100 according to an embodiment provides a virtual space that reflects a real space will be described by connecting FIG. 2 to FIG. 3. The IoT apparatus 300 in the real space is illustrated as being an oven.

The electronic device 100 according to an embodiment may display virtual space content 301 including an avatar 320 on the display. The virtual space content 301 may be, for example, a kitchen space.

For example, the electronic device 100 may display, on the display, the virtual object 10 corresponding to the oven, which is the IoT apparatus 300, together with the virtual space content 301. The virtual object 10 may be an oven that reflects the appearance, type, and/or control function of the IoT apparatus 300.

The server device 200 according to an embodiment may store, in a memory. a list of a plurality of IoT apparatuses and apparatus information (e.g., a model name and a serial number) of the IoT apparatus 300. For example, the server device 200 may generate virtual object data that takes into account the appearance, type, and control function of the IoT apparatus 300, based on the apparatus information of the IoT apparatus 300, and may store the virtual object data in the memory. For example, the server device 200 may include the list of the plurality of IoT apparatuses registered with the same account as that of the electronic device 100 and the apparatus information of the IoT apparatus 300, and may have the virtual object data for generating a virtual object reflecting the appearance, type, and control function of the IoT apparatus 300.

The server device 200 according to an embodiment may generate the virtual object 10 corresponding to the IoT apparatus 300, based on the apparatus information of the IoT apparatus 300 and the virtual object data. For example, the server device 200 may generate the virtual object 10 having the appearance, type, and control function of the IoT apparatus 300, based on the apparatus information of the IoT apparatus 300 and the virtual object data.

The server device 200 according to an embodiment may generate a virtual object that replicates the IoT apparatus 300 in consideration of the apparatus information, for example, the model name and the serial number, of the IoT apparatus 300. For example, when the server device 200 has the virtual object data matched with the apparatus information of the IoT apparatus 300, the server device 200 may generate a virtual object that reflects the appearance, type, and control function of the actual IoT apparatus 300.

The server device 200 according to an embodiment may generate a virtual object having a representative appearance that is pre-determined according to the type of the IoT apparatus 300. For example, when the server device 200 does not have the virtual object data matched with the apparatus information of the IoT apparatus 300, the server device 200 may generate a virtual object that reflects a representative appearance and a representative control function according to the type of the IoT apparatus 300.

For example, the electronic device 200 may have virtual object data matched with the model name of the oven, which is the IoT apparatus 300. The server device 200 may generate the virtual oven 10 that reflects the same appearance and cooking function as the oven, which is the IoT apparatus 300.

The server device 200 according to an embodiment may generate the virtual object management U Is 330 and 340 for managing the virtual object 10 corresponding to the IoT apparatus 300.

The electronic device 100 according to an embodiment may display, around the avatar 320, the virtual object management Uls 330 and 340 for managing the virtual object 10 (e.g., an oven). For example, the electronic device 100 may display the notification UI 340 reflecting the virtual object 10 on an upper right side of the avatar 320, and may display the control UI 330 for controlling the virtual object 10 on an upper left side of the avatar 320. For example, the notification UI 340 may be a two-dimensional (2D) or three-dimensional (3D) object having the appearance of the virtual object 10. In FIG. 3, the notification UI 340 is illustrated as a 2D icon having the appearance of the virtual object 10.

As will be described later, the electronic device 100 according to an embodiment may display an activated virtual object management UI, based on a user's input for the virtual object management UI. For example, the notification UI 340 and the control UI 330 may be displayed in a first state (e.g., a thin line state) until a user's input is received, and then displayed in a second state (e.g., a thick line state) in response to the user's input.

For example, the electronic device 100 may receive the status information from the IoT apparatus 300, and may display the notification UI 340 notifying the status information of the IoT apparatus 300. The electronic device 100 may display the virtual object 10 reflecting the status information of the IoT apparatus 300. For example, the electronic device 100 may receive a control input for the virtual object 10 through the control UI 330, and may transmit a control command to the IoT apparatus 300.

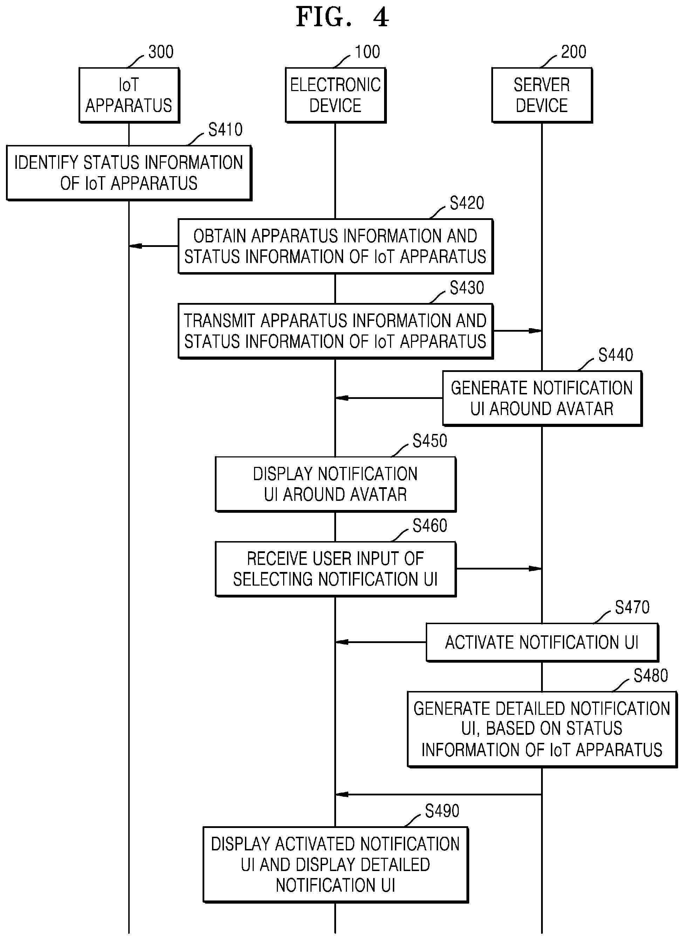

An operation, performed by the electronic device 100 according to an embodiment, of displaying a notification UI in a virtual object management UI will now be described with reference to FIGS. 4 through 8.

FIG. 4 is a flowchart of an operation, performed by a virtual space provision system according to an embodiment, of displaying a notification UI regarding status information of an IoT apparatus.

Referring to FIG. 4, in operation S410, the IoT apparatus 300 according to an embodiment may identify the status information of the IoT apparatus 300.

According to an embodiment, the status information of the IoT apparatus 300 may include a power on/off status, an operation mode, an operation completion, an operation start, a pause, an operation resume, etc. of the IoT apparatus 300. For example, when the IoT apparatus 300 is an oven, the status information of the IoT apparatus 300 may include cooking completion information.

In operation S420, the electronic device 100 according to an embodiment may obtain the apparatus information and the status information of the IoT apparatus 300.

According to an embodiment, the electronic device 100 may request the IoT apparatus 300 for the status information. According to an embodiment, the electronic device 100 may obtain the apparatus information and status information of the IoT apparatus 300 from the IoT apparatus 300, based on the request made to the IoT apparatus 300. For example, the electronic device 100 may communicate directly with the IoT apparatus 300 through a communication interface, or may communicate indirectly with the IoT apparatus 300 through the server device 200.

According to an embodiment, the electronic device 100 may request the IoT apparatus 300 for the status information every few seconds, every few minutes, or at preset time intervals. According to an embodiment, the IoT apparatus 300 may transmit the electronic device 100 for the status information.

According to an embodiment, the apparatus information of the IoT apparatus 300 may include information for identifying the appearance, type, control function, etc. of the IoT apparatus 300. For example, the apparatus information of the IoT apparatus 300 may include the model name, serial number, control function, etc. of the IoT apparatus 300. For example, when the IoT apparatus 300 is an oven, the apparatus information of the IoT apparatus 300 may include a model name, a serial number, and a control function (e.g., a cooking function) of the oven.

In operation S430, the electronic device 100 according to an embodiment may transmit the apparatus information and the status information of the IoT apparatus 300 to the server device 200.

According to an embodiment, when it is determined that the status information received from the IoT apparatus 300 is information needed to be notified, the electronic device 100 may transmit the status information to the server device 200. For example, when the status information received from the IoT apparatus 300 is operation completion information, the electronic device 100 may transmit the operation completion information to the server device 200. For example, when the IoT apparatus 300 is an oven, the electronic device 100 may transmit cooking completion information of the IoT apparatus 300 to the server device 200. For example, when the status information received from the IoT apparatus 300 is operation progress information, the electronic device 100 may not transmit the operation progress information to the server device 200.

According to an embodiment, the electronic device 100 may transmit, to the server device 200, the apparatus information of the IoT apparatus 300 together with the status information thereof.

In operation S440, the server device 200 according to an embodiment may generate a notification UI around an avatar.

According to an embodiment, the server device 200 may receive the apparatus information and status information of the IoT apparatus 300 from the electronic device 100. The server device 200 may generate the notification UI, which is a virtual object management UI, based on the apparatus information and status information of the IoT apparatus 300.

According to an embodiment, the server device 200 may store, for example, a list of IoT apparatuses, apparatus information of the IoT apparatuses (e.g., a model name and a serial number), and virtual object data corresponding to the IoT apparatuses. For example, the server device 200 may generate virtual object data that takes into account the appearance, type, and control function of the IoT apparatus 300, based on the apparatus information of the IoT apparatus 300, and may store the virtual object data in the memory.

According to an embodiment, the server device 200 may receive the apparatus information of the IoT apparatus 300, and may match the virtual object data stored in the server device 200 with the apparatus information. According to an embodiment, the server device 200 may generate a virtual object corresponding to the IoT apparatus 300, based on the apparatus information of the IoT apparatus 300 and the virtual object data matched with the apparatus information. For example, the server device 200 may generate a virtual object having the appearance, type, and control function of the IoT apparatus 300, based on the apparatus information and the virtual object data.

According to an embodiment, the server device 200 may receive the status information of the IoT apparatus 300 from the electronic device 100, and may generate a notification UI notifying the status information of the IoT apparatus 300. According to an embodiment, the server device 200 may generate the notification UI through the virtual object based on the apparatus information of the IoT apparatus 300.

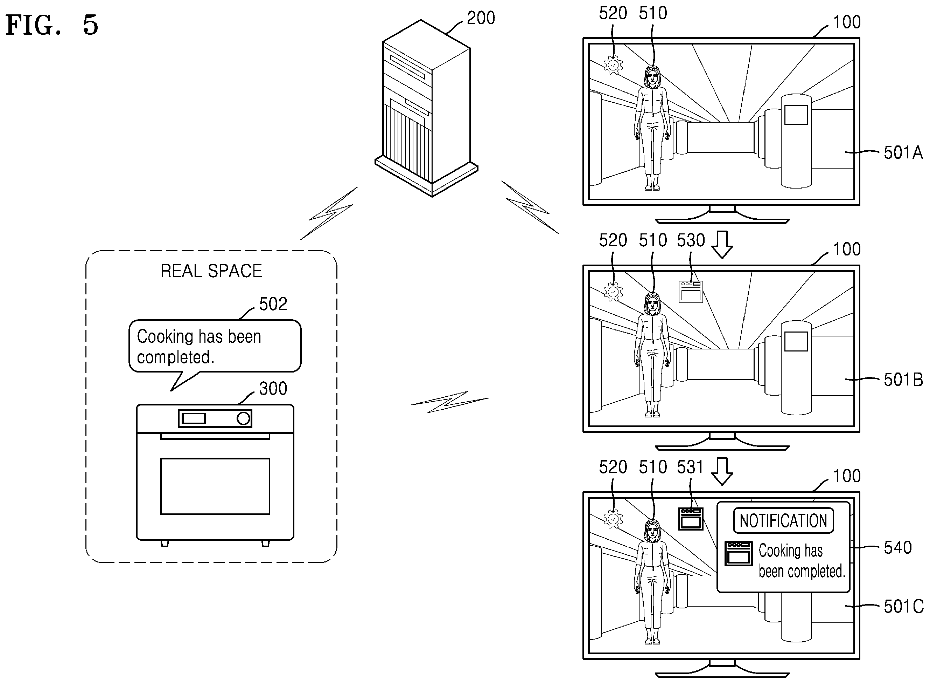

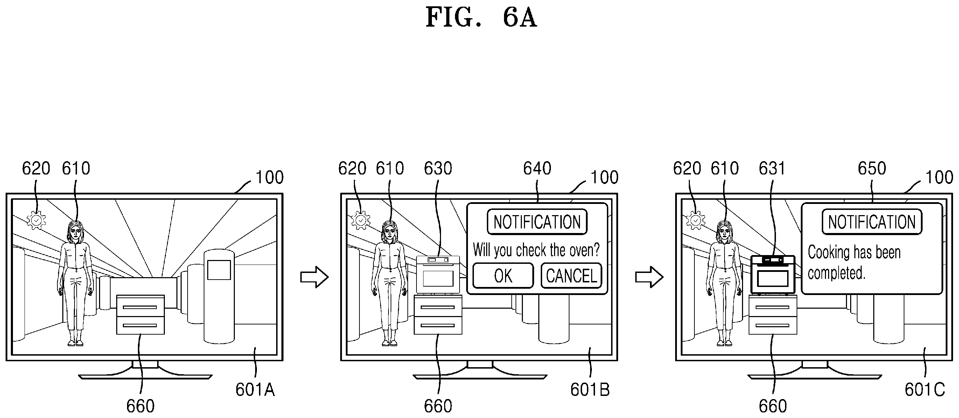

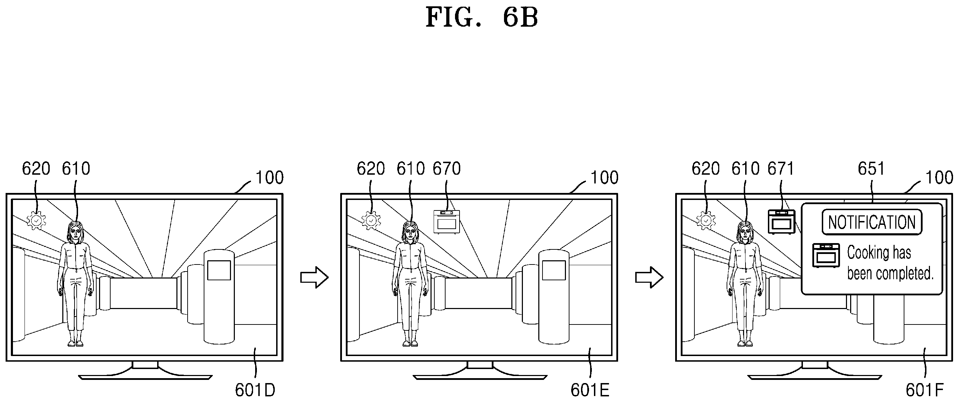

According to an embodiment, the notification UI may be generated in any one of a 2D object form reflecting the appearance of the IoT apparatus 300, a 2D object form reflecting a representative appearance according to the type of IoT apparatus 300, and a 3D object form modeling the IoT apparatus 300. For example, the server device 200 may generate a virtual object icon having the appearance of the IoT apparatus 300 (see FIG. 6B), a virtual object icon having the representative appearance according to the type of IoT apparatus 300 (see FIG. 5), or a virtual object icon modeling the IoT apparatus 300 (see FIG. 6A).

According to an embodiment, the server device 200 may generate the notification UI around the avatar. According to an embodiment, the server device 200 may obtain, for example, coordinates of an avatar of the virtual space and coordinates of a background. According to an embodiment, the server device 200 may generate the notification UI such that the notification UI is located around the avatar, through, for example, the coordinates of the avatar of the virtual space and the coordinates of the background.

According to an embodiment, the server device 200 may generate the notification UI, which is a virtual object icon in the form of a 2D object, around the avatar (see FIGS. 5 and 6B). According to an embodiment, the server device 200 may generate a notification UI modeled as a 3D object, around the avatar (see FIG. 6A).

According to an embodiment, the server device 200 may render the notification UI, which is a virtual object management UI. According to an embodiment, the server device 200 may transmit the rendered notification UI to the electronic device 100. For example, the server device 200 may perform a calculation for generating a notification UI, and may transmit a result screen image including the rendered notification UI to the electronic device 100 in a streaming manner.

In operation S450, the electronic device 100 according to an embodiment may display a notification UI notifying the status information of the IoT apparatus 300, around the avatar.

According to an embodiment, the electronic device 100 may receive a rendering result screen including the generated notification UI from the server device 200 in a streaming manner. The electronic device 100 according to an embodiment may display virtual space content including the notification UI received from the server device 200.

According to an embodiment, the electronic device 100 may display the notification UI in a first state around the avatar. For example, the first state may be an inactivated state, and the notification UI may be in a translucent state, a black and white state, a dotted line state, or a thin line state.

According to an embodiment, the electronic device 100 may display what IoT apparatus 300 is notified, and may not display detailed status information of the IoT apparatus 300. For example, the detailed status information may appear in a detailed notification UI according to a user input of selecting the notification UI. According to an embodiment, the electronic device 100 may use a virtual object based on the apparatus information of the IoT apparatus 300 in order to visually display what IoT apparatus 300 is notified.

According to an embodiment, the electronic device 100 may display the notification UI through the virtual object based on the apparatus information of the IoT apparatus 300. For example, the electronic device 100 may display what IoT apparatus 300 is notified, through a virtual object that reflects the appearance, type, and/or control function of the IoT apparatus 300. For example, the electronic device 100 may display a notification UI, which is a 2D or 3D object in which the appearance, type, and/or control function of the IoT apparatus 300 have been reflected.

According to an embodiment, the electronic device 100 may display the notification UI in any one of a 2D object form having the appearance of the IoT apparatus 300, a 2D object form having a representative appearance according to the type of IoT apparatus 300, and a 3D object form modeling the IoT apparatus 300. For example, the notification UI may be displayed as a virtual object icon having the appearance of the IoT apparatus 300 (see FIG. 6B), a virtual object icon having the representative appearance according to the type of IoT apparatus 300 (see FIG. 5), or a virtual object icon modeling the IoT apparatus 300 (see FIG. 6A).

In operation S460, the electronic device 100 according to an embodiment may receive the user input of selecting the notification UI. The electronic device 100 according to an embodiment may transmit, to the server device 200, an input signal according to the user input of selecting the notification UI.

The electronic device 100 according to an embodiment may receive the user input through an input interface, for example, a remote controller or a touch screen.

In operation S470, the server device 200 according to an embodiment may activate the notification UI, based on the input signal for the notification UI.

In the present disclosure, the notification UI being activated refers to the notification U I being changed from the first state to a second state. The second state may be an activated state, and the notification UI may be in an opaque state, a colored state, a solid line state, a thick line state, etc. The first state and the second state may be different from each other.

In operation S480, the server device 100 according to an embodiment may generate a detailed notification UI, based on the status information of the IoT apparatus 300. The server device 200 according to an embodiment may generate a detailed notification UI, based on the user input for the notification UI.

According to an embodiment, the detailed notification UI may include a message regarding the status information of the IoT apparatus 300. For example, the detailed notification UI may include a message regarding the cooking completion information of the oven, which is the IoT apparatus 300.

According to an embodiment, the server device 200 may render the activated notification UI and the detailed notification UI. According to an embodiment, the server device 200 may transmit the rendered notification UI and the rendered detailed notification UI to the electronic device 100. For example, the server device 200 may perform a calculation for generating the activated notification UI and the detailed notification UI, and may transmit virtual space content including the notification UI and the detailed notification UI to the electronic device 100.

In operation S490, the electronic device 100 according to an embodiment may display the activated notification UI and the detailed notification UI.

According to an embodiment, the electronic device 100 may display the notification UI in the second state around the avatar.

According to an embodiment, the electronic device 100 may display the detailed notification UI including the message regarding the status information of the IoT apparatus 300. For example, the electronic device 100 may display a message regarding the cooking completion information of the oven, which is the IoT apparatus 300.

According to an embodiment of the present disclosure, the electronic device 100 may display a notification UI notifying the status information of the IoT apparatus 300, around the avatar.

According to an embodiment of the present disclosure, a user may conveniently identify the status information of the IoT apparatus 300 by selecting the notification UI displayed around the avatar. For example, while the user is performing a content activity through the avatar in the virtual space content, the user may identify the status information of the IoT apparatus 300 through the notification UI displayed around the avatar. For example, even when the user does not manipulate the avatar so that the avatar moves to a location at which the virtual object corresponding to the IoT apparatus 300 is positioned, the user may identify the status information of the IoT apparatus 300 by interacting with the notification UI displayed around the avatar.

FIG. 5 is a diagram illustrating an operation, performed by a virtual space provision system according to an embodiment, of displaying a notification UI regarding status information of an IoT apparatus.

Referring to FIG. 5, the electronic device 100 according to an embodiment may receive virtual space content 501: 501A, 501B, and 501C executed in the server device 200, and may display the virtual space content 501: 501A, 501B, and 501C on the display. The electronic device 100 according to an embodiment may display an avatar 510 within the virtual space content 501. The server device 200 according to an embodiment may generate a virtual object within the virtual space content 501, in correspondence with the IoT apparatus 300 within a real space. FIG. 5 illustrates that the IoT apparatus 300 is an oven.

In FIG. 5, the electronic device 100 may represent a 501A state in which a control UI 520 is displayed around the avatar 510, a 501B state in which the control UI 520 and an inactivated notification UI 530 are displayed around the avatar 510, and a 501C state in which the control UI 520 and an activated notification UI 531 are displayed around the avatar 510 and a detailed notification UI 540 is displayed. The 501A state is a general state in which the avatar 510 performs a content activity. The 501B state is a notification state for notifying status information 502 of the IoT apparatus 300. The 501C state is a detailed notification state for notifying the status information 502 of the IoT apparatus 300 in detail.

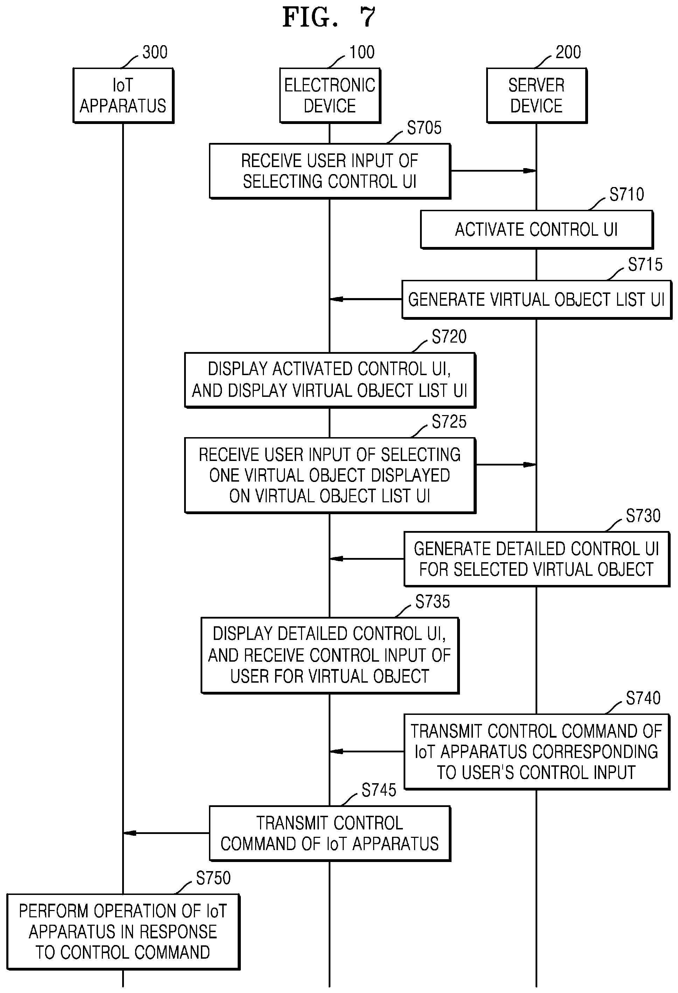

The electronic device 100 according to an embodiment may periodically read the status information 502 of the IoT apparatus 300, and, when there is a completed task, may display the notification UI 530 notifying the status information 502 of the IoT apparatus 300. The control UI 520 for controlling the IoT apparatus 300 may always be displayed around the avatar 510. This will be described below in FIG. 7.

In the 501A state, the electronic device 100 according to an embodiment may perform the content activity through the avatar 510 displayed in the virtual space content 501A.

The IoT apparatus 300 according to an embodiment may identify the status information 502. For example, the IoT apparatus 300 may identify cooking completion information. An operation of the IoT apparatus 300 may be set in advance by a user. For example, the user may set a cooking time of an oven, and may perform a cooking action.

The electronic device 100 according to an embodiment may obtain the apparatus information and the status information 502 of the IoT apparatus 300 according to a request.

The electronic device 100 according to an embodiment may transmit the apparatus information and the status information 502 of the IoT apparatus 300 to the server device 200. For example, the electronic device 100 may transmit the apparatus information and the cooking completion information of the IoT apparatus 300 to the server device 200. For example, when the status information received from the IoT apparatus 300 is operation progress information, the electronic device 100 may not transmit the operation progress information to the server device 200.

The server device 200 according to an embodiment may generate the notification UI 530 around the avatar 510, based on the apparatus information of the IoT apparatus 300. For example, the notification UI 530 may be generated in the form of an icon representing a virtual object. For example, the notification UI 530 may be generated in the form of an icon having an appearance of the oven.

The server device 200 according to an embodiment may transmit the virtual space content 501B in which the notification UI 530 is generated, to the electronic device 100 in a streaming manner.

In the 501B state, the electronic device 100 according to an embodiment may display the notification UI 530 around the avatar according to a change in the status information of the IoT apparatus 300. The electronic device 100 according to an embodiment may display the virtual space content 501B including the notification UI 530 received from the server device 200.

In the 501B state, the electronic device 100 according to an embodiment may display the notification UI 530 having the representative appearance according to the type of the IoT apparatus 300, based on the apparatus information of the IoT apparatus 300. For example, the notification UI 530 may be generated in the form of a virtual object icon having the representative appearance of the oven.

In the 501B state, the electronic device 100 according to an embodiment may display the notification UI 530 in the first state around the avatar 510. For example, the notification UI 530 in the first state may be displayed in a translucent state as an inactivated state according to the absence of a user input.

The electronic device 100 according to an embodiment may receive a user input of selecting the notification UI 530. The electronic device 100 according to an embodiment may transmit, to the server device 200, an input signal according to the user's input of selecting the notification UI 530.

The server device 200 according to an embodiment may generate the activated notification UI 531, based on the input signal for the notification UI 530. The server device 200 according to an embodiment may generate the detailed notification UI 540, based on the input signal for the notification UI 530. The server device 200 according to an embodiment may transmit the virtual space content 501C in which a rendered notification UI 531 and the detailed notification UI 540 are generated, to the electronic device 100.

In the 501C state, the electronic device 100 according to an embodiment may display the activated notification UI 531 according to the user input of selecting the notification UI 530, and may display the detailed notification UI 540. The electronic device 100 according to an embodiment may display the notification UI 531 in the second state around the avatar 510. For example, the notification UI 531 in the second state may be displayed in an opaque state as an activated state according to a user input.

In the 501C state, the electronic device 100 according to an embodiment may display the detailed notification UI 540 including a message regarding the status information 502 of the IoT apparatus 300. For example, the electronic device 100 may display the detailed notification UI 540 including a message "Cooking has been completed."

FIG. 6A is a diagram illustrating an operation, performed by a virtual space provision system according to an embodiment, of displaying a notification UI regarding status information of an IoT apparatus.

Referring to FIG. 6A, the electronic device 100 according to an embodiment may receive virtual space content 601: 601A, 601B, and 601C executed in the server device 200, and may display the virtual space content 601: 601A, 601B, and 601C on the display. The electronic device 100 according to an embodiment may display an avatar 610 within the virtual space content 601. In FIG. 6A, the IoT apparatus 300 and the server device 200 are omitted, and only the electronic device 100 is illustrated.

Referring to FIG. 6A, the server device 200 according to an embodiment differs from the embodiment of FIG. 5 in that the server device 200 generates notification Uls 630 and 631 representing a virtual object in the form of a 3D object modeling an actual apparatus. The electronic device 100 according to an embodiment may display the notification Uls 630 and 631 in the form of a 3D object modeling the actual IoT apparatus 300, based on the apparatus information of the IoT apparatus 300.

The electronic device 100 may represent a 601A state in which a control UI 620 is displayed around the avatar 610, a 601B state in which a control UI 620 and an inactivated notification UI 630 are displayed around the avatar 610, and a 601C state in which the control UI 620 and an activated notification UI 631 are displayed around the avatar 610 and a detailed notification UI 640 is displayed. The 601A state is a general state in which the avatar 610 performs a content activity. The 601B state is a notification state for notifying status information of the IoT apparatus 300. The 601C state is a detailed notification state for notifying the status information of the IoT apparatus 300 in detail.

In the 601A state, the electronic device 100 according to an embodiment may perform the content activity through the avatar 610 displayed in the virtual space content 601A.

The electronic device 100 according to an embodiment may receive the status information of the IoT apparatus 300 and may transmit the status information to the server device 200. The electronic device 100 may receive the apparatus information of the IoT apparatus 300 and may transmit the apparatus information to the server device 200.

The server device 200 according to an embodiment may generate the notification UI 630 around the avatar 630, based on the apparatus information of the IoT apparatus 300. The server device 200 according to an embodiment may generate, as the notification UI 630, a virtual object in the form of a 3D object modeling the IoT apparatus 300. In the 601B state, the server device 200 according to an embodiment may generate the notification UI 630 by considering the avatar 610 and a background around the avatar 610. For example, the server device 200 may generate an oven corresponding to the notification UI 630 so that the oven may be placed on a shelf object 660 around the avatar 610 by considering coordinates of the shelf object 660.

The server device 200 according to an embodiment may generate an inquiry UI 640 together with the notification UI 630. The server device 200 may generate the inquiry UI 640 for inquiring whether the user has made a selection, and the location of the inquiry UI 640 is not limited to the surroundings of the avatar 610, and the inquiry UI 640 may be placed at any of various locations.

The server device 200 according to an embodiment may transmit the virtual space content 601B in which the notification UI 630 and the inquiry UI 640 are generated, to the electronic device 100.

In the 601B state, the electronic device 100 according to an embodiment may display the notification UI 630 around the avatar according to a change in the status information of the IoT apparatus 300, and may display the inquiry UI 640 in a partial area. The electronic device 100 according to an embodiment may display the virtual space content 601B including the notification UI 630 and the inquiry UI 640 received from the server device 200.

In the 601B state, the electronic device 100 according to an embodiment may display, as the notification UI 630, the virtual object in the form of a 3D object modeling the IoT apparatus 300. The electronic device 100 according to an embodiment may display the notification UI630 by considering the background around the avatar 610. For example, the electronic device 100 may display an oven corresponding to the notification UI 630 to be placed on the shelf object 660 around the avatar 610. The electronic device 100 according to an embodiment may display the notification UI 630 in the first state around the avatar 610. For example, the notification UI 630 of the first state may be displayed in a translucent state as an inactivated state according to the absence of a user input.

In the 601B state, the electronic device 100 according to an embodiment may display the inquiry UI 640 for inquiring whether a user has made a selection. For example, the electronic device 100 may display an inquiry UI 640 having a message, such as "Would you like to check the oven? OK/Cancel" in a partial area of the virtual space content 601B. However, embodiments are not limited thereto. The electronic device 100 according to an embodiment may perform a subsequent operation in response to a user input of selecting the notification UI 630.

The electronic device 100 according to an embodiment may receive the user input of selecting the notification UI 630. The electronic device 100 according to an embodiment may transmit, to the server device 200, an input signal according to the user's input of selecting the notification UI 630.

The server device 200 according to an embodiment may generate the activated notification UI 631, based on the input signal for the notification UI 630. The server device 200 according to an embodiment may generate a detailed notification UI 650, based on the input signal for the notification UI 630. The server device 200 according to an embodiment may transmit the virtual space content 601C in which the activated notification UI 631 and the detailed notification UI 650 are generated, to the electronic device 100.

In the 601C state, the electronic device 100 according to an embodiment may display the activated notification UI 631 according to the user input of selecting the notification UI 630, and may display the detailed notification UI 650. The electronic device 100 according to an embodiment may display the notification UI 631 of the second state around the avatar 610. For example, the notification UI 631 in the second state may be displayed in an opaque state as an activated state according to a user input.

In the 601C state, the electronic device 100 according to an embodiment may display the detailed notification UI 650 including a message regarding the status information of the IoT apparatus 300. For example, the electronic device 100 may display the detailed notification UI 650 including a message "Cooking has been completed."

FIG. 6B is a diagram illustrating an operation, performed by a virtual space provision system according to an embodiment, of displaying a notification UI regarding status information of an IoT apparatus.

Referring to FIG. 6B, the electronic device 100 according to an embodiment may receive virtual space content 601: 601D, 601E, and 601F executed in the server device 200, and may display the virtual space content 601: 601D, 601E, and 601F on the display. The electronic device 100 according to an embodiment may display an avatar 610 within the virtual space content 601. In FIG. 6B, the IoT apparatus 300 and the server device 200 are omitted, and only the electronic device 100 is illustrated.

Referring to FIG. 6B, the server device 200 according to an embodiment differs from the embodiment of FIG. 5 in that the server device 200 generates notification Uls 670 and 671 representing a virtual object in the form of a 2D object having an outer appearance of the IoT apparatus 300. The electronic device 100 according to an embodiment may display the notification Uls 670 and 671 in the form of a 2D object having the outer appearance of the actual IoT apparatus 300, based on the apparatus information of the IoT apparatus 300. For example, the electronic device 100 may display a virtual object icon having the appearance of an oven, which is the IoT apparatus 300. The electronic device 100 according to an embodiment may display a detailed notification UI 651 including a message regarding the status information of the IoT apparatus 300.

An operation, performed by the electronic device 100 according to an embodiment, of displaying a control UI from among virtual object management Uls will now be described with reference to FIGS. 7 through 12.

FIG. 7 is a flowchart of an operation, performed by a virtual space provision system according to an embodiment, of displaying a control UI for controlling an IoT apparatus.

Referring to FIG. 7, in operation S705, the electronic device 100 according to an embodiment may receive a user's input of selecting the control UI.

According to an embodiment, the electronic device 100 may display the control UI for controlling the IoT apparatus 300, around an avatar. The electronic device 100 according to an embodiment may receive virtual space content including the control UI from the server device 200, and may display the virtual space content. According to an embodiment, the electronic device 100 may always display the control UI around the avatar. For example, the electronic device 100 may always display the control UI rather than displaying the notification UI when receiving the status information from the IoT apparatus 300. However, embodiments are not limited thereto, and the control UI may not be displayed according to settings of a user.

According to an embodiment, the electronic device 100 may display the control UI in a first state around the avatar. For example, the first state may be an inactivated state, and the control UI may be in a translucent state, a black and white state, a dotted line state, a thin line state, etc. According to an embodiment, the control UI may be displayed in the form of a 2D object, such as a settings icon.

The electronic device 100 according to an embodiment may receive a user input of selecting the control UI. The electronic device 100 according to an embodiment may transmit, to the server device 200, an input signal according to the user's input of selecting the control UI.

The electronic device 100 according to an embodiment may receive the user's input through an input interface, for example, a remote controller or a touch screen.

In operation S710, the server device 200 according to an embodiment may activate the control UI, based on the input signal for the control UI.

In the present disclosure, the control UI being activated refers to the control UI being changed from the first state to a second state. The second state may be an activated state, and the control UI may be in an opaque state, a colored state, a solid line state, a thick line state, etc. The first state and the second state may be different from each other.

In operation S715, the server device 200 according to an embodiment may generate a virtual object list UI, based on the input signal for the control UI.

The server device 200 according to an embodiment may generate a virtual object list UI through the list of IoT apparatuses 300, the apparatus information of the IoT apparatus 300, and the virtual object data corresponding to the IoT apparatus 300, which are stored in a memory.

According to an embodiment, the server device 200 may generate, as the virtual object list UI, the list of IoT apparatuses 300 registered with the same account as the electronic device 100. According to an embodiment, the virtual object list UI may include a list of virtual objects corresponding to IoT apparatuses.

According to an embodiment, the server device 200 may render the activated control UI and the virtual object list UI, and may transmit the rendered activated control UI and the rendered virtual object list UI to the electronic device 100 in a streaming manner. For example, the server device 200 may perform a calculation for generating the activated control UI and the virtual object list UI, and may transmit virtual space content including the activated control UI and the virtual object list UI to the electronic device 100.

In operation S720, the electronic device 100 according to an embodiment may display the activated control UI, and may display the virtual object list UI.

According to an embodiment, the electronic device 100 may display the control UI in the second state around the avatar. The second state may be an activated state, and the control UI may be in an opaque state or a colored state.

According to an embodiment, the electronic device 100 may display the virtual object list UI through the user's input of selecting the control UI. According to an embodiment, the electronic device 100 may display the virtual object list UI including, the list of IoT apparatuses 300 registered with the same account as the electronic device 100. According to an embodiment, the electronic device 100 may display at least one of the type of controllable IoT apparatus 300, the location of the IoT apparatus 300, and the status information of the IoT apparatus 300, through the virtual object list UI. For example, the IoT apparatus 300 may be controlled through the server device 200.

In operation S725, the electronic device 100 according to an embodiment may receive a user's input of selecting one virtual object displayed on the virtual object list UI. The electronic device 100 according to an embodiment may transmit, to the server device 200, an input signal according to the user's input of selecting one virtual object from a plurality of virtual objects listed on the virtual object list UI.

In operation S730, the server device 200 according to an embodiment may generate a detailed control UI including a control function for the selected virtual object. The server device 200 according to an embodiment may generate the detailed control UI, based on an input signal of the user who selects the virtual object.

According to an embodiment, the control UI may include the control function for the selected virtual object. For example, when the selected virtual object is an oven, the detailed control UI may include various icons, text, etc. for setting cooking functions of the oven. For example, when the selected virtual object is an air conditioner, the detailed control UI may include various icons, text, etc. for setting driving functions of the air conditioner.

In operation S735, the electronic device 100 according to an embodiment may display the detailed control UI including the control function for the selected virtual object, and may receive a user's control input for a virtual object.

According to an embodiment, the electronic device 100 may receive a user's control input of setting a control function of a virtual object displayed on the detailed control UI. For example, the electronic device 100 may receive a user's control input of setting the oven's cooking temperature, cooking mode, etc. For example, the electronic device 100 may receive a user's control input of setting the air conditioner's driving temperature, driving mode, etc.

The electronic device 100 according to an embodiment may transmit, to the server device 200, the user's control input of setting the control function of the virtual object.

In operation S740, the server device 100 according to an embodiment may generate a control command of the IoT apparatus 300 corresponding to the user's control input, and may transmit the control command. The server device 200 according to an embodiment may generate the control command of the IoT apparatus 300 corresponding to the virtual object, based on the user's control input received from the electronic device 100. The server device 200 according to an embodiment may transmit the control command of the IoT apparatus 300 to the electronic device 100.

In operation S745, the electronic device 100 according to an embodiment may transmit the control command of the IoT apparatus 300 to the IoT apparatus 300. The electronic device 100 according to an embodiment may receive the control command of the IoT apparatus 300 from the server device 200.

In operation S750, the IoT apparatus 300 according to an embodiment may perform an operation of the IoT apparatus 300 in response to the control command. The IoT apparatus 300 according to an embodiment may receive the control command from the electronic device 100, and may perform an operation corresponding to the user's control input. For example, an oven, which is the IoT apparatus 300, may set a cooking temperature and a cooking mode and perform a cooking operation, according to the user's control input. For example, an air conditioner, which is the IoT apparatus 300, may set a driving temperature and a driving mode and perform a driving operation, according to the user's control input.

According to an embodiment of the present disclosure, the user may control the IoT apparatus 300 by selecting the control UI displayed around the avatar. For example, even when the user does not manipulate the avatar so that the avatar moves to a location at which the virtual object corresponding to the IoT apparatus 300 is positioned, the user may control the IoT apparatus 300 by interacting with the control UI displayed around the avatar.

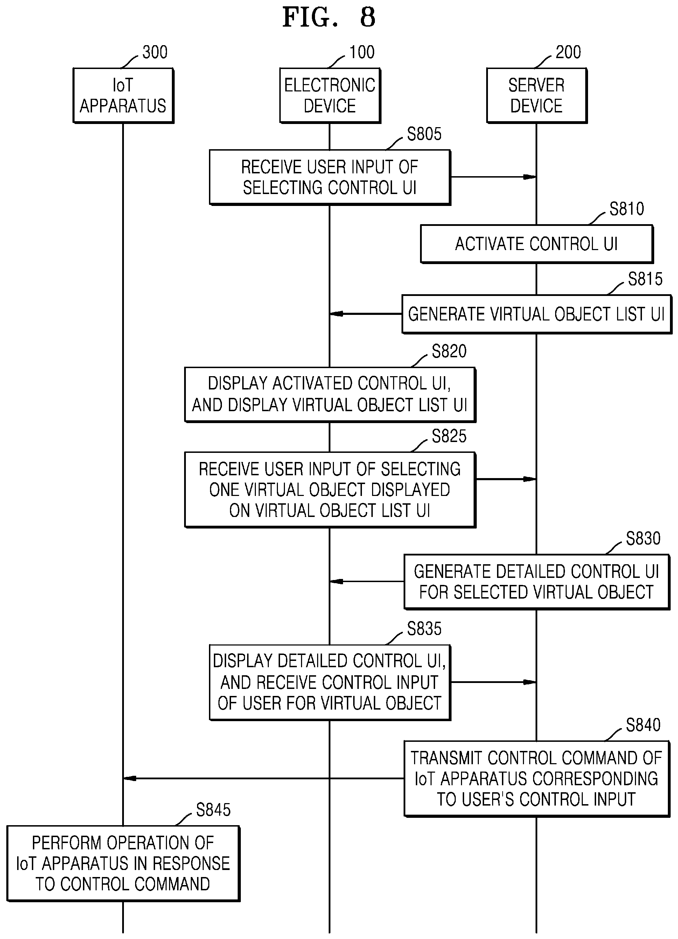

FIG. 8 is a flowchart of an operation, performed by a virtual space provision system according to an embodiment, of displaying a control UI for controlling an IoT apparatus.

Referring to FIG. 8, operations S805 through S835 are identical to those in FIG. 7, and therefore, descriptions thereof are omitted.

In operation S840, the server device 100 according to an embodiment may transmit a control command of the IoT apparatus 300 corresponding to the user's control input directly to the IoT apparatus 300. The server device 200 according to an embodiment may have an IoT apparatus management module, and may communicate directly with the IoT apparatus 300.

In operation S845, the IoT apparatus 300 according to an embodiment may may perform an operation in correspondence with the control command received from the server device 200.

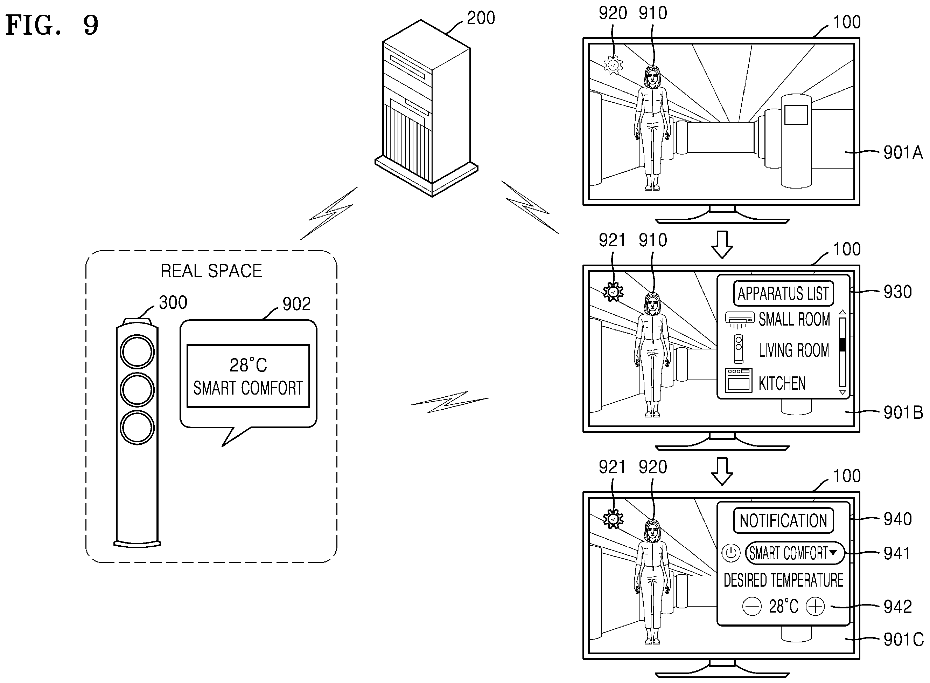

FIG. 9 is a diagram illustrating an operation, performed by a virtual space provision system according to an embodiment, of displaying a control UI for controlling an IoT apparatus.

Referring to FIG. 9, the electronic device 100 according to an embodiment may receive virtual space content 901: 901A, 901B, and 901C executed in the server device 200, and may display the virtual space content 901: 901A, 901B, and 901C on the display. The electronic device 100 according to an embodiment may display an avatar 910 within the virtual space content 901. The server device 200 according to an embodiment may generate a virtual object within the virtual space content 901, in correspondence with the IoT apparatus 300 within a real space. FIG. 9 illustrates that the IoT apparatus 300 is an air conditioner.

In FIG. 9, the electronic device 100 may display a 901A state in which an inactivated control UI 920 is displayed around the avatar 910, a 901B state in which an activated control UI 921 is displayed around the avatar 910 and a virtual object list UI 930 is displayed on a partial area, and a 901C state in which the activated control UI 921 is displayed around the avatar 910 and a detailed control UI 940 is displayed on a partial area. The 901A state is a general state in which the avatar 910 performs a content activity. The 901B state is a standby state that shows IoT apparatuses 300 controllable by the user as a virtual object list. The 901C state is a detailed control state that shows the control function of the IoT apparatus 300 according to a selected virtual object.

In the 901A state, the electronic device 100 according to an embodiment may perform a content activity through the avatar 910 displayed in the virtual space content 901A. The electronic device 100 according to an embodiment may display the inactivated control UI 920 around the avatar 910. For example, the electronic device 100 may always display the inactivated control UI 920 around the avatar 910 who performs various content activities. However, embodiments are not limited thereto.

The electronic device 100 according to an embodiment may receive a user's input of selecting the control UI 920. The electronic device 100 according to an embodiment may transmit, to the server device 200, an input signal according to the user's input of selecting the control UI 920.

The server device 200 according to an embodiment may generate the activated notification UI 921, based on the input signal for the control UI 920. The server device 200 according to an embodiment may generate the virtual object list UI 930, based on the input signal for the control UI 920. The server device 200 according to an embodiment may transmit, to the electronic device 100, the virtual space content 901B in which a rendered control UI 921 and the virtual object list UI 930 are generated.

In the 901B state, the electronic device 100 according to an embodiment may display the activated control UI 921 according to the user input of selecting the control UI 920, and may display the virtual object list UI 930. The electronic device 100 according to an embodiment may display the control UI 921 in the second state around the avatar 910. For example, the control UI 921 in the second state may be displayed in an opaque state as an activated state according to a user input.

In the 901B state, the electronic device 100 according to an embodiment may display a list of IoT apparatuses registered with the same account in the server device 200 through the virtual object list UI 930. For example, the electronic device 100 may display a list of virtual objects corresponding to the IoT apparatuses through the virtual object list UI 930. For example, the electronic device 100 may display respective locations of the IoT apparatuses 300 and virtual objects corresponding to the IoT apparatuses 300 in the form of icons through the virtual object list UI 930. For example, the virtual object list **UI** 930 may include an air conditioner icon located in a small room, an air conditioner icon located in a living room, and an oven icon located in a kitchen.

The electronic device 100 according to an embodiment may receive a user input of selecting one virtual object 931 displayed on the virtual object list **UI** 930. The electronic device 100 according to an embodiment may transmit, to the server device 200, an input signal according to the user's input of selecting the one virtual object 931. For example, the electronic device 100 may transmit, to the server device 200, an input signal according to a user's input of selecting the air conditioner icon located in a living room.

The server device 200 according to an embodiment may generate a detailed control UI including a control function for the selected virtual object 931. The server device 200 according to an embodiment may generate the detailed control UI 940, based on the input signal of the user who selects the virtual object 931.

According to an embodiment, the detailed control UI 940 may include the control function for the selected virtual object 931. For example, the detailed control UI 940 may include a first field 941 for selecting an operating mode among operating functions of the air conditioner and a second field 942 for setting an operating temperature.

The server device 200 according to an embodiment may transmit the virtual space content 901C in which the detailed control UI 940 is generated, to the electronic device 100.

In the 901C state, the electronic device 100 according to an embodiment may display the detailed control UI 930 for setting the control function for the selected virtual object 931. The electronic device 100 according to an embodiment may display the detailed control UI 930 on a partial area.

In the 901C state, the electronic device 100 according to an embodimentmay receive the user's control input of setting the control function of the virtual object 931 displayed on the detailed control UI 930. For example, the electronic device 100 may receive the user's control input of setting the operating mode as "smart comfort" through the first field 941, and may receive the user's control input of setting the operating temperature to "28 degrees" through the second field 942.

In the 901C state, the electronic device 100 according to an embodiment may display a list of IoT apparatuses registered with the same account in the server device 200 through the virtual object list UI 930. For example, the electronic device 100 may display a list of virtual objects corresponding to the IoT apparatuses through the virtual object list UI 930. For example, the electronic device 100 may display respective locations of the IoT apparatuses 300 and virtual objects corresponding to the IoT apparatuses 300 in the form of icons through the virtual object list UI 930. For example, the virtual object list UI 930 may include an air conditioner icon located in a small room, an air conditioner icon located in a living room, and an oven icon located in a kitchen.

The electronic device 100 according to an embodiment may transmit, to the server device 200, the user's input signal received through the virtual object list UI 930. The server device 200 according to an embodiment may generate a control command of the IoT apparatus 300 corresponding to the user's control input, and may transmit the control command. For example, the server device 200 may transmit the control command of the IoT apparatus 300 to the electronic device 100, and the electronic device 100 may transmit the control command to the IoT apparatus 300. Alternatively, for example, the server device 200 may transmit the control command of the IoT apparatus 300 directly to the IoT apparatus 300.

The IoT apparatus 300 according to an embodiment may receive the control command from the server device 200 or the electronic device 100. The IoT apparatus 300 may perform an operation corresponding to the user's control input, based on the received control command, as indicated by reference numeral 902. For example, an air conditioner, which is the IoT apparatus 300, may operate in a "smart comfort" mode and at a "28 degrees" temperature, according to the user's control input.

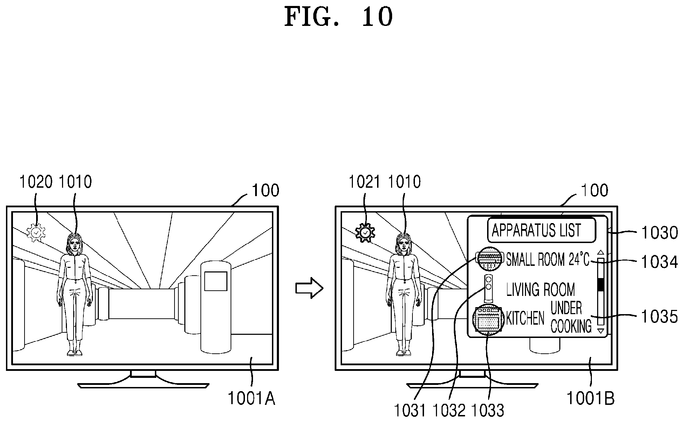

Various operations of displaying various Uls for controlling the IoT apparatus 300 will now be described referring to FIGS. 10 through 12. The server device 200 and IoT apparatus 300 are omitted from the drawings.

FIG. 10 is a diagram illustrating an operation, performed by a virtual space provision system according to an embodiment, of displaying a virtual object list UI.

Referring to FIG. 10, the electronic device 100 according to an embodiment may display information of IoT apparatuses through a virtual object list UI 1030.

In a 1001A state, the electronic device 100 according to an embodiment may perform a content activity through an avatar 1010 displayed on virtual space content 1001A. The electronic device 100 according to an embodiment may display an inactivated control UI 1020 around the avatar 1010. The 1001A state corresponds to the 901A state of FIG. 9.

In a 1001B state, the electronic device 100 according to an embodiment may display an activated control UI 1021 according to a user input of selecting the control UI 1020, and may display the virtual object list UI 1030.

The electronic device 100 according to an embodiment may display a list of IoT apparatuses registered with the same account in the server device 200 through the virtual object list UI 1030. The electronic device 100 according to an embodiment may display at least one of the type of IoT apparatus 300, the location of the IoT apparatus 300, and the status information of the IoT apparatus 300, through the virtual object list UI 1030. For example, the electronic device 100 may use a virtual object icon to display the type of IoT apparatus 300.

For example, the virtual object list UI 1030 may include virtual objects 1031, 1032, and 1033 corresponding to IoT apparatuses 300 and respective locations of the IoT apparatuses 300. For example, the electronic device 100 may display an air conditioner 1031 located in a small room, an air conditioner 1032 located in a living room, and an oven 1033 located in a kitchen through the virtual object list UI 1030.

The electronic device 100 according to an embodiment may display a power on/off status, an operation mode, an operation completion, an operation start, a pause, an operation resume, etc. of the IoT apparatus 300 from among the status information of the IoT apparatus 100.

According to an embodiment, the electronic device 100 may display the virtual object icon in different states according to whether the IoT apparatus 300 is in an on/off state. For example, when the IoT apparatus 300 is in an on state, the electronic device 100 may display the virtual object icon in color, check, shade, etc. For example, when the IoT apparatus 300 is in an off state, the electronic device 100 may display the virtual object icon in black and white, or may display the virtual object icon by omitting a check or a shade. For example, the electronic device 100 may perform a shade display on the air conditioner 1031 and the oven 1033 that are in an on state, and may omit the shade display on the air conditioner 1032 that is in an off state.

According to an embodiment, the electronic device 100 may display, as text, representative operation information among the status information of the IoT apparatus 300 that is in an on state. For example, an operating temperature 1034 of the air conditioner 1031 that is in an on state may be displayed as text, and a cooking state 1035 of the oven 1033 that is in an on state may be displayed as text.

Meanwhile, the server device 200 according to an embodiment may generate the virtual object list UI 1030 including the type of IoT apparatus 300, the location of the IoT apparatus 300, and the status information of the IoT apparatus 300, and may provide the virtual space content 1001B including the virtual object list UI 1030 to the electronic device 100.

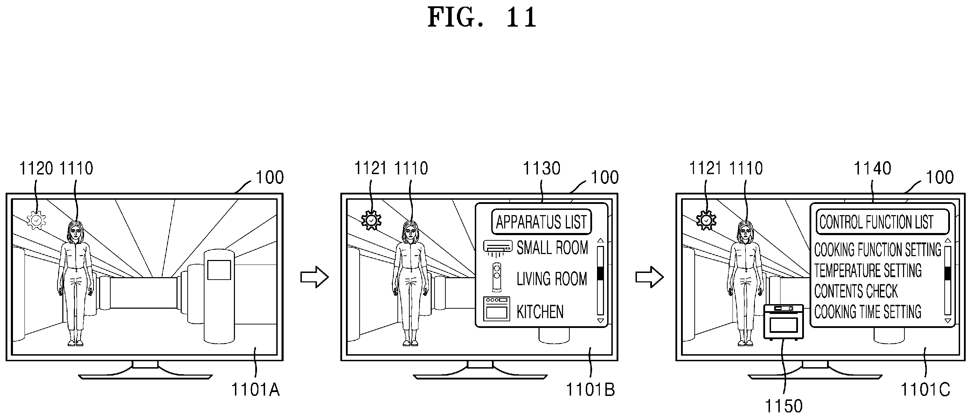

FIG. 11 is a diagram illustrating an operation, performed by a virtual space provision system according to an embodiment, of displaying a control UI for controlling an IoT apparatus.

Referring to FIG. 11, the electronic device 100 according to an embodiment may display a virtual object 1150 of a 3D object form, based on a user input of selecting one virtual object displayed on a virtual object list UI 1130.

In a 1101A state, the electronic device 100 according to an embodiment may display an avatar 1110 and a control UI 1120 of the virtual space content 1101A. The 1101A state corresponds to the 901A state of FIG. 9.

In a 1101B state, the electronic device 100 may receive a user input of selecting one virtual object icon from among a plurality of virtual objects listed on the virtual object list UI 1130. The 1101B state corresponds to the 901B state of FIG. 9.

In a state 1101C, the electronic device 100 according to an embodiment may display the virtual object 1150 around the avatar 1110, in a form obtained by modeling an actual device. For example, the virtual object 1150 may be a 3D object modeling an oven as the IoT apparatus 300.

In the state 1101C, the electronic device 100 according to an embodiment may display a detailed control UI 1140 on which control functions of a virtual object are listed. For example, the detailed control UI 1140 may include a cooking function, a temperature, a contents check, a cooking time, etc of the virtual object.

The server device 200 according to an embodiment may generate the virtual object 1150 around the avatar 1110, in a form obtained by modeling an actual device. The server device 200 according to an embodiment may generate the virtual object 1150 by considering the background around the avatar 1110. A way in which the server device 200 generates the virtual object 1150 in a form modeling an actual IoT apparatus may be similar to a way in which the server device 200 generates the notification UI 630 in a form modeling an actual IoT apparatus in FIG. 6A. The server device 200 according to an embodiment may provide virtual space content 1101C including the virtual object 1150 to the electronic device 100.

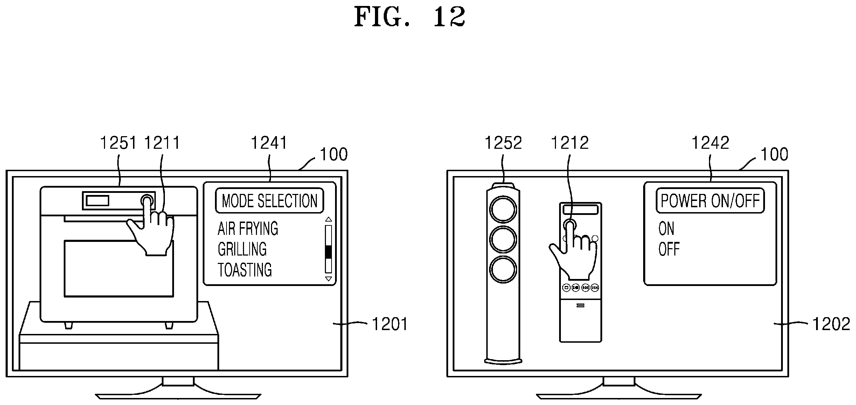

FIG. 12 is a diagram illustrating an operation, performed by a virtual space provision system according to an embodiment, of displaying a control UI for controlling an IoT apparatus.

Referring to FIG. 12, the electronic device 100 according to an embodiment may display virtual space contents 1201 and 1202 including a detailed control UI 1240: 1241 and 1242, and a virtual object 1250: 1251 and 1252. The virtual space contents 1201 and 1202 may be contents according to a user's input of selecting one virtual object displayed on a virtual object list UI. The virtual space contents 1201 and 1202 may be screens for manipulating a selected virtual object from a first-person perspective. As the electronic device 100 displays the virtual space contents 1201 and 1202, the user may intuitively control as if using an actual IoT apparatus 300.

For example, the electronic device 100 may display a virtual space content 1201 of a first-person view including the detailed control UI 1241 and the virtual object 1251, according to the user's input of selecting an oven. For example, the electronic device 100 may display an avatar 1211 controlling an oven, in a first-person view. For example, the user may manipulate an operation of the avatar 1211, and may set a control function of the oven by selecting the detailed control UI 1241.

For example, the electronic device 100 may display a virtual space content 1202 of a first-person view including the detailed control UI 1242 and the virtual object 1252, according to the user's input of selecting an air conditioner. For example, the electronic device 100 may display an avatar 1212 controlling an air conditioner, in a first-person view. For example, the user may manipulate an operation of the avatar 1212, and may set a control function of the air conditioner by selecting the detailed control UI 1242.

The server device 200 according to an embodiment may generate the virtual space contents 1201 and 1202 including the detailed control UI 1240: 1241 and 1242, and the virtual object 1250: 1251 and 1252. The server device 200 according to an embodiment may generate the virtual space contents 1201 and 1202 of a first-person view. The server device 200 according to an embodiment may provide the virtual space contents 1201 and 1202 of a first-person view to the electronic device 100.

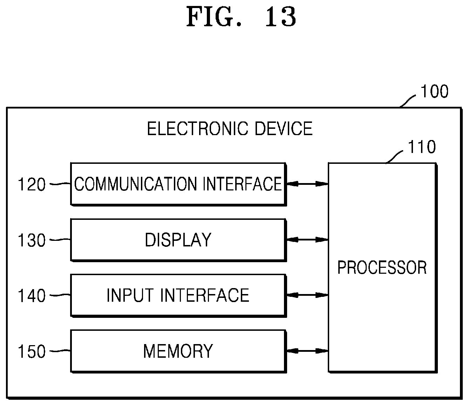

FIG. 13 is a block diagram of a structure of an electronic device according to an embodiment.

Referring to FIG. 13, the electronic device 100 according to an embodiment may include a processor 110, a communication interface 120, a display 130, an input interface 140, and a memory 150.

The communication interface 120 according to an embodiment may connect the electronic device 100 to an external apparatus, such as the IoT apparatus 300, the server device 200, or a mobile terminal, under a control by the processor 110. For example, the communication interface 120 may include a Wi-Fi module, a Bluetooth module, an infrared communication module, a wireless communication module, a local area network (LAN) module, an Ethernet module, a wired communication module, and the like. Each of these communication modules may be implemented in the form of at least one hardware chip. The wireless communication module may include at least one communication chip that performs communication according to various wireless communication standards, such as Zigbee, 3^{rd} Generation (3G), 3^{rd} Generation Partnership Project (3GPP), Long Term Evolution (LTE), LTE Advanced (LTE-A), 4^{th} Generation (4G), and 5^{th} Generation (5G).

The communication interface 120 according to an embodiment may receive content including an avatar from the server device 200, under a control by the processor 110.

The communication interface 120 according to an embodiment may receive the status information of the IoT apparatus 300 from the IoT apparatus 300, under a control by the processor 110.

The communication interface 120 according to an embodiment may receive the apparatus information of the IoT apparatus 300 from the IoT apparatus 300 under a control by the processor 110.

The communication interface 120 according to an embodiment may transmit a control command to the IoT apparatus 300 under a control by the processor 110.

The communication interface 120 according to an embodiment may receive, from the server device 200, content in which a virtual object management UI is generated around an avatar, under a control by the processor 110.

The communication interface 120 according to an embodiment may receive, from the server device 200, content in which an activated virtual object management UI is generated, under a control by the processor 110.

The display 130 according to an embodiment may generate a driving signal by converting an image signal, a data signal, an on-screen display (OSD) signal, and a control signal processed by the processor 110, and may display an image according to the driving signal.

The display 130 according to an embodiment may display the content including the avatar under a control by the processor 110.

The display 130 according to an embodiment may display the virtual object management UI for managing a virtual object corresponding to an IoT apparatus, around the avatar, under a control by the processor 110.

The display 130 according to an embodiment may display the activated virtual object management UI, based on the user's input for the virtual object management UI, under a control by the processor 110.

The input interface 140 according to an embodiment may receive a user input for controlling the electronic device 100. The user interface 140 may include, for example, a touch panel for sensing a user's touch, a button for receiving a user's input, a wheel, a keyboard, a dome switch, a microphone for voice recognition, and a motion detection sensor. The input interface 140 according to an embodiment may receive a user input via an external control device, such as a remote controller.

The communication interface 140 according to an embodiment may receive a user's input of selecting the virtual object management **UI,** under a control by the processor 110. For example, the input interface 140 may receive a user input for a notification **UI,** a control UI, a detailed notification **UI,** a virtual object list **UI, a** detailed control UI, an inquiry UI, etc. under a control by the processor 110.

The memory 150 according to an embodiment may store various pieces of data, programs, or applications for driving and controlling the electronic device 100. A program stored in the memory 150 according to an embodiment may include one or more instructions. A program (one or more instructions) or application stored in the memory 150 may be executed by the processor 110.

The memory 150 according to an embodiment may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk.

The processor 110 according to an embodiment controls an overall operation of the electronic device 100, controls signal transfer among the internal components of the electronic device 100, and processes data.

The processor 110 according to an embodiment may include at least one of a central processing unit (CPU), a graphics processing unit (GPU), or a video processing unit (VPU). Alternatively, according to embodiments, the processor 110 may be implemented in the form of a system on chip (SOC) that integrates at least one of a CPU, a GPU, and a VPU. Alternatively, the processor 110 may further include a neural processing unit (NPU).

The processor 110 according to an embodiment may control the operations of the electronic device 100 to be performed, by executing the one or more programs stored in the memory 150.

The processor 110 according to an embodiment may display content including the avatar on the display 130 by executing the one or more instructions stored in the memory 150. The processor 110 according to an embodiment may display a virtual object management UI for managing a virtual object corresponding to the IoT apparatus 300, around the avatar. The processor 110 according to an embodiment may display the activated virtual object management UI, based on a user's input for the virtual object management UI. The processor 110 according to an embodiment may obtain the status information from the IoT apparatus 300 through the communication interface 120, when the virtual object management UI includes the notification UI.

The processor 110 according to an embodiment may obtain the apparatus information of the IoT apparatus 300 from the IoT apparatus 300 through the communication interface 120, by executing the one or more instructions stored in the memory 150. The processor 110 according to an embodiment may display the notification UI through the virtual object based on the apparatus information of the IoT apparatus 300.

The processor 110 according to an embodiment may display the detailed notification UI having a message regarding the status information of the IoT apparatus 300, based on a user's input for the notification UI, by executing the one or more instructions stored in the memory 150.

For example, the apparatus information may include at least one of the model name, serial number, and control function of the IoT apparatus 300.

The processor 110 according to an embodiment may display the notification UI in any one of a 2D object form having the appearance of the IoT apparatus 300, a 2D object form having a representative appearance according to the type of IoT apparatus 300, and a 3D object form modeling the IoT apparatus 300, by executing the one or more instructions stored in the memory 150.

The processor 110 according to an embodiment may obtain the user's control input for the IoT apparatus 300 through the control UI, when the virtual object management UI includes the control UI, by executing the one or more instructions stored in the memory 150. The processor 110 according to an embodiment may transmit a control command based on the user's control input to the IoT apparatus 300.

The processor 110 according to an embodiment may display the virtual object list UI on which a plurality of virtual objects are listed, based on a user's input for the control UI, by executing the one or more instructions stored in the memory 150. Based on a user's input for one virtual object among the plurality of virtual objects listed in the virtual object list UI, the processor 110 according to an embodiment may display a detailed control UI having a control function for the one virtual object.

The processor 110 according to an embodiment may display at least one of the type of controllable IoT apparatus 300, the location of the IoT apparatus 300, and the status information of the IoT apparatus 300 through the control UI, by executing the one or more instructions stored in the memory 150.

The processor 110 according to an embodiment may display the virtual object list UI in a first state, by executing the one or more instructions stored in the memory 150. The processor 110 according to an embodiment may display the activated virtual object management UI in a second state different from the first state.

The processor 110 according to an embodiment may receive content includingthe virtual object list UI from the server device 200, by executing the one or more instructions stored in the memory 150. The processor 110 according to an embodiment may transmit the status information of the IoT apparatus 300 to the server device 200.

According to an embodiment of the present disclosure, the electronic device 100 may control a virtual object synchronized with the IoT apparatus 300, or may display a virtual object list UI for providing the status information of the IoT apparatus 300, around the avatar. The electronic device 100 according to an embodiment may conveniently manage a virtual object of a virtual space and the IoT apparatus of a real space through user interaction with the virtual object management UI displayed around the avatar. For example, the user may not move to the IoT apparatus 300 in order to control the IoT apparatus 300 of a real space, and may not move the avatar to a space where the virtual object is located, in order to control the virtual object of a virtual space. The user may conveniently control the IoT apparatus 300 of the real space through the virtual object management UI displayed around the avatar. In addition, the electronic device 100 may display the status information of the IoT apparatus 300 in adaptive real time, and may interact with the user in real time.

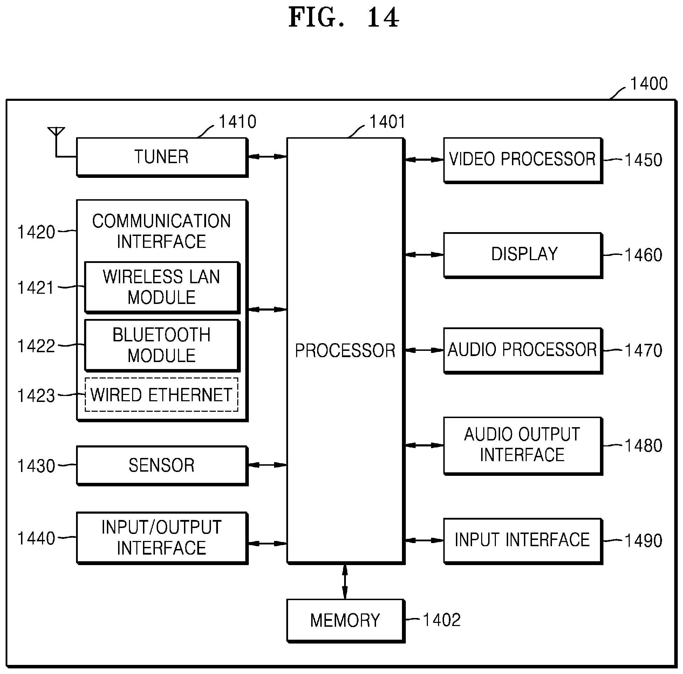

FIG. 14 is a detailed block diagram of a structure of an electronic device according to an embodiment.

An electronic device 1400 of FIG. 14 may be an example of the electronic device 100 of FIG. 13. A description of FIG. 14 that is the same as given above with reference to FIG. 13 will not be repeated herein.

Referring to FIG. 14, the electronic device 1400 may include a processor 1401 and a memory 1402. The processor 1401 and the memory 1402 included in the electronic device 1400 may perform the same operations as the processor 110 and the memory 150 included in the electronic device 100 of FIG. 13.

According to an embodiment, the electronic device 1400 may further include a tuner 1410, a communication interface 1420, a sensor 1430, an input/output (I/O) interface 1440, a video processor 1450, a display 1460, an audio processor 1470, an audio output interface 1480, and an input interface 1490, in addition to the processor 1401 and the memory 1402. The communication interface 1420 may correspond to the communication interface 120 of FIG. 13. The display 1460 may correspond to the display 130 of FIG. 13. The input interface 1490 may correspond to the input interface 140 of FIG. 13.

The tuner 1410 may tune and select only a frequency of a channel which the electronic device 1400 wants to receive from among many radio wave components that are obtained via amplification, mixing, resonance, or the like of wired or wireless broadcasting contents. Content received through the tuner 1410 is decoded and separated into audio, video, and/or additional information. The audio, the video, and/or the additional information may be stored in the memory 1402 under a control by the processor 1401.

According to an embodiment, the communication interface 1420 may connect the electronic device 1400 to, for example, a peripheral apparatus, an external device, a server, or a mobile terminal, under a control by the processor 1401. The communication interface 1420 may include at least one communication module capable of performing wireless communication. The communication interface 1420 may include at least one of a wireless LAN module 1421, a Bluetooth module 1422, and a wired Ethernet 1423 in correspondence to a performance and a structure of the electronic device 1400.

The wireless LAN module 1421 may transmit or receive a Wi-Fi signal to or from the peripheral apparatus according to the Wi-Fi communication standard. The Bluetooth module 1422 may receive a transmitted Bluetooth signal from the peripheral apparatus according to the Bluetooth communication standard. The Bluetooth module 1422 may be a Bluetooth Low Energy (BLE) communication module, and may receive a BLE signal. The Bluetooth module 1422 may continuously or temporarily scan the BLE signal in order to detect whether the BLE signal is received.

The sensor 1430 may sense a voice of the user, an image of the user, or an interaction of the user, and may include a microphone, a camera, a light receiver, and a sensing unit.

The I/O interface 1440 may receive video (for example, a moving image signal or a still image signal), audio (for example, a voice signal or a music signal), and additional information from an external apparatus under a control by the processor 1401. The I/O interface 1440 may include one of a High-Definition Multimedia Interface (HDMI) port, a component jack, a PC port, and a USB port.

The video processor 1450 may process image data that is to be displayed on the display 1460, and may perform a variety of image processing, such as decoding, rendering, scaling, noise filtering, frame rate transformation, and resolution transformation, on the image data.

The display 1460 may output, on a screen, content received from a broadcasting station, received from an external apparatus, such as an external server or an external storage medium, or provided by various apps, such as an OTT service provider or a metaverse content provider.

The audio processor 1470 processes audio data. The audio processor 1470 may perform a variety of processing, such as decoding, amplification, or noise filtering, on the audio data.

The audio output interface 1480 may output audio included in the content received via the tuner 1410, audio that is input via the communication interface 1420 or the I/O interface 1440, and audio stored in the memory 1402, under a control by the processor 1401. The audio output interface 1480 may include at least one of a speaker, a headphone, or a Sony/Philips Digital Interface (S/PDIF).

The input interface 1490 may receive a user input for controlling the electronic device 1400. The input interface 1490 may include, but is not limited to, various types of user input devices including a touch panel for sensing a user's touch, a button for receiving a user's push operation, a wheel for receiving a user's rotation operation, a keyboard, a dome switch, a microphone for voice recognition, and a motion detection sensor.

According to an embodiment, the input interface 1490 may receive a user input for controlling the avatar displayed on the display 1060. For example, the input interface 1490 may receive an input regarding a movement direction of the avatar, under a control by the processor 1401. For example, when the input interface 1490 includes a remote controller having directional keys, the processor 1401 may control the movement direction of the avatar through the directional keys.

According to an embodiment, the input interface 1490 may receive a user input for selecting a virtual object management UI displayed on the display 1060. For example, the input interface 1490 may receive an input of selecting the virtual object management UI, under a control by the processor 1401.

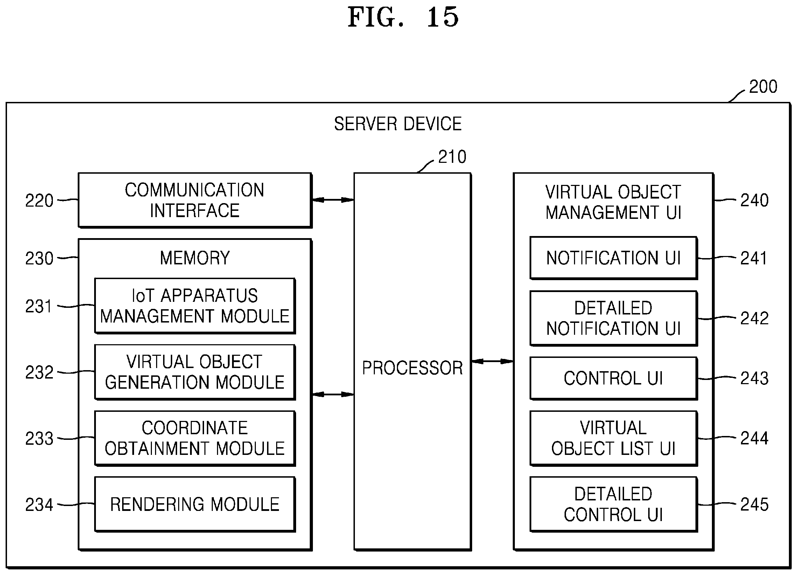

FIG. 15 is a block diagram of a structure of a server device according to an embodiment.

Referring to FIG. 15, a server 200 according to an embodiment may include a processor 210, a communication interface 220, a memory 230, and a virtual object management UI 240.

The communication interface 220 according to an embodiment may transmit or receive data or a signal to or from the electronic device 100 and the IoT apparatus 300. For example, the communication interface 220 may include a Wi-Fi module, a Bluetooth module, an infrared communication module, a wireless communication module, a LAN module, an Ethernet module, a wired communication module, and the like. Each of these communication modules may be implemented in the form of at least one hardware chip.

The communication interface 220 according to an embodiment may transmit content including an avatar to the electronic device 100, under a control by the processor 210.

The communication interface 220 according to an embodiment may receive the status information of the IoT apparatus 300 from the electronic device 100, under a control by the processor 210.

The communication interface 220 according to an embodiment may receive an input signal for a control UI included in the virtual object management UI from the electronic device 100, under a control by the processor 210. The communication interface 220 according to an embodiment may transmit, to the IoT apparatus 300, a control command for controlling the IoT apparatus 300 corresponding to a virtual object, under a control by the processor 210.

The processor 210 according to an embodiment controls an overall operation of the server device 200, controls signal transfer among the internal components of the server device 200, and processes data.

The processor 210 according to an embodiment may include at least one of a central processing unit (CPU), a graphics processing unit (GPU), or a video processing unit (VPU). Alternatively, according to embodiments, the processor 210 may be implemented in the form of a system on chip (SOC) that integrates at least one of a CPU, a GPU, and a VPU. Alternatively, the processor 210 may further include a neural processing unit (NPU).

The memory 230 according to an embodiment may store various pieces of data, programs, or applications for driving and controlling the server device 200. A program stored in the memory 230 may include at least one instruction. A program (one or more instructions) or application stored in the memory 230 may be executed by the processor 210.

The memory 230 according to an embodiment may store an IoT apparatus management module 231, a virtual object generation module 232, a coordinate obtainment module 233, and a rendering module 234.

The memory 210 according to an embodiment may execute one or more instructions included in each of the IoT apparatus management module 231, the virtual object generation module 232, the coordinate obtainment module 233, and the rendering module 234.

The processor 210 according to an embodiment may identify an IoT apparatus 300 registered with the same account in the server device 200, by executing the one or more instructions included in the IoT apparatus management module 231. The IoT apparatus management module 231 according to an embodiment may store a list of a plurality of IoT apparatuses and apparatus information (e.g., a model name and a serial number) of the IoT apparatus 300. The IoT apparatus management module 231 according to an embodiment may store the appearance, type, and control function of the IoT apparatus 300, based on the apparatus information of the IoT apparatus 300.

The processor 210 according to an embodiment may generate a control command for controlling the IoT apparatus 300, and may transmit the control command to the IoT apparatus 300, by executing the one or more instructions included in the IoT apparatus management module 231.

The processor 210 according to an embodiment may generate virtual object data based on the apparatus information of the IoT apparatus 300, by executing the one or more instructions included in the virtual object generation module 232. The virtual object generation module 232 according to an embodiment may store the virtual object data that takes into account the appearance, type, and control function of the IoT apparatus 300. The processor 210 according to an embodiment may generate a virtual object in which the appearance, type, and control function of the IoT apparatus 300 have been reflected, by executing the one or more instructions included in the virtual object generation module 232.

The processor 210 according to an embodiment may obtain coordinates of an object within a virtual space, by executing the one or more instructions included in the coordinate obtainment module 233. The processor 210 according to an embodiment may obtain coordinates of the avatar, coordinates of a background, etc., and generate a notification UI so that the notification UI may be located around the avatar, by executing the one or more instructions included in the coordinate obtainment module 233.

The processor 210 according to an embodiment may render virtual space content, by executing the one or more instructions included in the rendering module 234. The processor 210 according to an embodiment may transmit the rendered virtual space content to the electronic device 100 through the communication interface 220.

The virtual object management UI 240 according to an embodiment may be a user interface (UI) for managing a virtual object in a virtual space. The virtual object management UI according to an embodiment may be in the form of a 2D object or 3D object for interacting with a user. The virtual object management UI according to an embodiment may include a notification UI 241, a detailed notification UI 242, a control UI 243, a virtual object list UI 244, and a detailed control UI 245. The virtual object management UI may further include a query UI that requests a user's selection.

The notification UI 241 according to an embodiment may represent a notification for the status information of the IoT apparatus 300. The notification UI 241 according to an embodiment may be activated according to a user input of selecting the notification UI 241.

The detailed notification UI 242 according to an embodiment may represent a detailed message for the status information of the IoT apparatus 300.

The control UI 243 according to an embodiment may control the IoT apparatus 300. The control UI 243 according to an embodiment may receive a user input of controlling the IoT apparatus 300. The control UI 243 may be activated according to a user input of selecting the control UI 243.

The virtual object list UI 244 according to an embodiment may include a list of virtual objects corresponding to IoT apparatuses. The virtual object list UI 244 according to an embodiment may include at least one of the type of controllable IoT apparatus 300, the location of the IoT apparatus 300, and the status information of the IoT apparatus 300.

The detailed control UI 245 according to an embodiment may include a control function for a virtual object selected by the user. A user input of selecting a control function for a virtual object may be obtained through the detailed control UI 245.

The virtual object list UI 240 according to an embodiment may be generated by the processor 210. The processor 210 according to an embodiment may generate the virtual object management UI 240 in the virtual space content. The processor 210 according to an embodiment may transmit the virtual space content including the virtual object management UI 240 to the electronic device 100. The processor 210 according to an embodiment may interact with the user through the virtual object management UI 240.

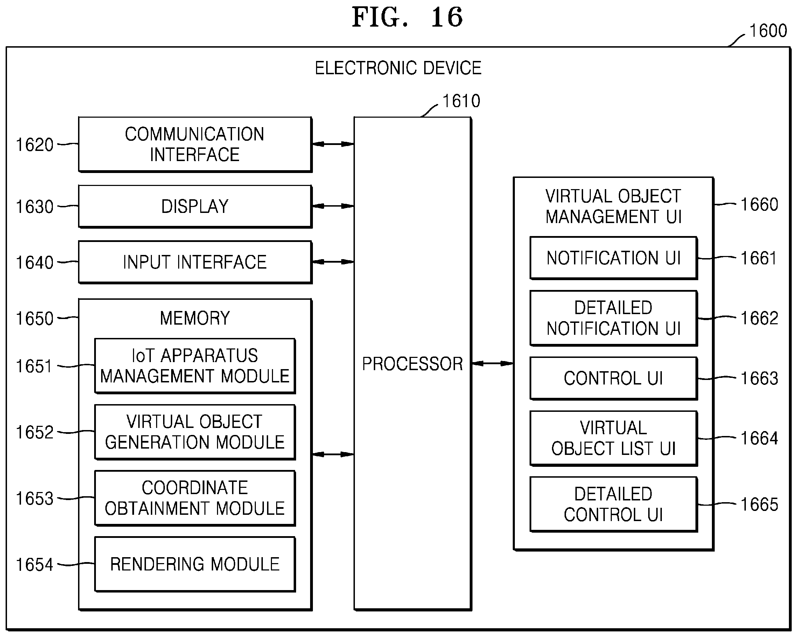

According to an embodiment, the electronic device 100 executing virtual space content, generating a virtual object management UI, and displaying the virtual object management UI will now be described with reference to FIG. 16.

FIG. 16 is a block diagram of a structure of an electronic device according to an embodiment.

Referring to FIG. 16, an electronic device 1600 according to an embodiment may include a processor 1610, a communication interface 1620, a display 1630, an input interface 1640, a memory 1650, and a virtual object management UI 1660. A description of FIG. 16 that is the same as given above with reference to FIG. 13 will not be repeated herein.

The communication interface 1620 of FIG. 16 may correspond to the communication interface 120 of FIG. 13, the display 1630 of FIG. 16 may correspond to the display 130 of FIG. 13, and the input interface 1640 of FIG. 16 may correspond to the input interface 140 of FIG. 13.

The electronic device 1600 according to the embodiment is different from the electronic device 100 according to the embodiment of FIG. 13 in that the memory 1650 may store an IoT apparatus management module 1651, a virtual object generation module 1652, a coordinate obtainment module 1653, and a rendering module 1654.

The processor 1610 according to an embodiment may execute one or more instructions included in each of the IoT apparatus management module 1651, the virtual object generation module 1652, the coordinate obtainment module 1653, and the rendering module 1654.

The processor 1610 according to an embodiment may identify an IoT apparatus 300 registered with the same account in the server device 200, by executing the one or more instructions included in the IoT apparatus management module 1651. The IoT apparatus management module 1651 according to an embodiment may store a list of a plurality of IoT apparatuses and apparatus information (e.g., a model name and a serial number) of the IoT apparatus 300. The IoT apparatus management module 1651 according to an embodiment may store the appearance, type, and control function of the IoT apparatus 300, based on the apparatus information of the IoT apparatus 300.

The processor 1610 according to an embodiment may generate a control command for controlling the IoT apparatus 300, and may transmit the control command to the IoT apparatus 300, by executing the one or more instructions included in the IoT apparatus management module 1651.

The processor 1610 according to an embodiment may generate virtual object data based on the apparatus information of the IoT apparatus 300, by executing the one or more instructions included in the virtual object generation module 1652. The virtual object generation module 1652 according to an embodiment may store the virtual object data that takes into account the appearance, type, and control function of the IoT apparatus 300.

The processor 1610 according to an embodiment may obtain coordinates of an object within a virtual space, by executing the one or more instructions included in the coordinate obtainment module 1653. The processor 1610 according to an embodiment may obtain coordinates of the avatar, coordinates of a background, etc., and generate a notification UI so that the notification UI may be located around the avatar, by executing the one or more instructions included in the coordinate obtainment module 1653.

The processor 1610 according to an embodiment may generate virtual space content, by executing the one or more instructions included in the rendering module 1654.

The processor 1610 according to an embodiment may generate the virtual object management UI 1660. The processor 1610 according to an embodiment may generate the notification UI 1661, the detailed notification UI 1662, the control UI 1663, the virtual object list UI 1664, and the detailed control UI 1665.

The processor 1610 according to an embodiment may receive a user's input of selecting the virtual object management UI 1660 through the input interface 1640, and may activate the virtual object management UI 1660. The processor 1610 according to an embodiment may display the activated virtual object management UI 1660 on the display 1630. The processor 1610 according to an embodiment may interact with the user through the virtual object management UI 1660.

An operation method of a display device according to an embodiment may be embodied as program commands executable by various computer means and may be recorded on a computer-readable medium. The computer-readable medium may include program commands, data files, data structures, and the like separately or in combinations. The program commands to be recorded on the medium may be specially designed and configured for the present disclosure or may be well-known to and usable by one of ordinary skill in the art of computer software. Examples of a computer-readable recording medium include a magnetic medium such as a hard disk, a floppy disk, or a magnetic tape, an optical medium such as a compact disk-read-only memory (CD-ROM) or a digital versatile disk (DVD), a magneto-optical medium such as a floptical disk, and a hardware device specially configured to store and execute program commands such as a ROM, a random-access memory (RAM), or a flash memory. Examples of the program commands are high-level language codes that can be executed by a computer by using an interpreter or the like as well as machine language codes made by a compiler.

At least one of the operation methods of a display device, according to embodiments of the disclosure, may be provided by being included in a computer program product. The computer program product, which is a commodity, may be traded between sellers and buyers.

The computer program product may include a software (S/W) program and a computer-readable storage medium having the S/W program stored thereon. For example, the computer program product may include a product in the form of a software program (e.g., a downloadable app) that is electronically distributed through the manufacturer of an electronic device or an electronic market (e.g., Google Play Store, AppStore). For electronic distribution, at least a portion of the S/W program may be stored on a storage medium or may be created temporarily. In this case, the storage medium may be a server of a manufacturer, a server of an electronic market, or a storage medium of a relay server for temporarily storing an SW program.

The computer program product may include, in a system including a server and a client device, a storage medium of the server or a storage medium of the client device. Alternatively, if there is a third device (e.g., a smartphone) in communication with the server or client device, the computer program product may include a storage medium of the third device. Alternatively, the computer program product may include the software program itself transmitted from the server to the client device or the third device, or transmitted from the third device to the client device.

In this case, one of the server, the client device, and the third device may execute the computer program product to perform the methods according to the disclosed embodiments. Alternatively, at least two of the server, the client device, and the third device may execute the computer program product to distribute and perform the methods according to the disclosed embodiments.

For example, a server (e.g., a cloud server or an artificial intelligence server) may execute a computer program product stored on a server to control a client device communicating with the server to perform the methods according to the disclosed embodiments.

While one or more embodiments of the present disclosure have been described with reference to the figures, it will be understood by those of ordinary skill in the art that various changes in form and details may be made therein without departing from the spirit and scope as defined by the following claims.

## Claims

1. An electronic device (100) comprising:
a communication interface (120);
a display (130);
a memory (150) storing one or more instructions; and
at least one processor (110) configured to execute the one or more instructions stored in the memory (150),
wherein the at least one processor (110) is configured to execute the one or more instructions to:
display content including an avatar on the display (130),
display, around the avatar, a virtual object management user interface (UI) for managing a virtual object corresponding to an Internet of Things (IoT) apparatus (300),
display an activated virtual object management UI, based on a user's input for the virtual object management UI, and
obtain status information from the IoT apparatus (300) through the communication interface (120), when the virtual object management UI includes a notification UI.

2. The electronic device (100) of claim 1, wherein the at least one processor (110) is configured to execute the one or more instructions to:
obtain apparatus information of the IoT apparatus (300) from the IoT apparatus (300) through the communication interface (120), and
display the notification UI through the virtual object based on the apparatus information of the IoT apparatus (300).

3. The electronic device (100) of claim 2, wherein the at least one processor (110) is configured to execute the one or more instructions to,
based on a user's input for the notification UI, display a detailed notification UI having a message regarding status information of the IoT apparatus (300).

4. The electronic device (100) of claim 2, wherein the apparatus information includes at least one of a model name, a serial number, and a control function of the IoT apparatus (300).

5. The electronic device (100) of any one of claims 1 through 4, wherein the at least one processor (110) is configured to execute the one or more instructions to
display the notification UI in any one of a two-dimensional (2D) object form having an appearance of the IoT apparatus (300), a 2D object form having a representative appearance according to the type of IoT apparatus 300, and a three-dimensional (3D) object form modeling the IoT apparatus (300).

6. The electronic device (100) of any one of claims 1 through 5, wherein the at least one processor (110) is configured to execute the one or more instructions to:
obtain a user's control input for the IoT apparatus (300) through the control UI, when the virtual object management UI includes a control UI, and
transmit a control command based on the user's control input to the IoT apparatus (300).

7. The electronic device (100) of claim 6, wherein the at least one processor (110) is configured to execute the one or more instructions to:
display a virtual object list UI on which a plurality of virtual objects are listed, based on a user's input for the control UI, and
based on a user's input for one virtual object among the plurality of virtual objects listed in the virtual object list UI, display a detailed control UI having a control function for the one virtual object.

8. The electronic device (100) of claim 6, wherein the at least one processor (110) is configured to execute the one or more instructions to:
display at least one of a type of controllable IoT apparatus (300), a location of the IoT apparatus (300), and the status information of the IoT apparatus 300, through the control UI.

9. The electronic device (100) of any one of claims 1 through 8, wherein the at least one processor (110) is configured to execute the one or more instructions to:
display the virtual object management UI in a first state, and
display the activated virtual object management UI in a second state different from the first state.

10. The electronic device (100) of any one of claims 1 through 9, wherein the at least one processor (110) is configured to execute the one or more instructions to:
receive content including the virtual object management UI from a server device (200), and
transmit the status information of the IoT apparatus (300) to the server device (200).

11. A server device (200) comprising:
a communication interface (220);
a memory (230) storing one or more instructions; and at least one processor (210) configured to execute the one or more instructions stored in the memory (230), wherein the at least one processor (210) is configured to execute the one or more instructions to:
transmit content including an avatar to an electronic device (100) through the communication interface (220),
generate, around the avatar, a virtual object management user interface (UI) for managing a virtual object corresponding to an Internet of Things (IoT) apparatus (300), and
activate the virtual object management UI, based on an input signal for the virtual object management UI.

12. The server device (200) of claim 11, wherein the memory (230) includes
one of a list of IoT apparatuses (300), apparatus information of the IoT apparatus (300), and virtual object data corresponding to the IoT apparatus (300).

13. The server device (200) of claim 11 or 12, wherein the at least one processor (210) is configured to execute the one or more instructions to:
based on receiving status information of the IoT apparatus (300) from the electronic device (100) through the communication interface (220), generate a notification UI included in the virtual object management UI, and
based on receiving an input signal for a control UI included in the virtual object management UI from the electronic device (100) through the communication interface (220), transmit a control command for controlling the IoT apparatus (300) corresponding to the virtual object.

14. The server device (200) of any one of claims 11 through 13, wherein the at least one processor (210) is configured to execute the one or more instructions to:
render the virtual object management UI, and
transmit the content including the rendered virtual object management UI to the electronic device (100) through the communication interface (220).

15. An operation method of an electronic device (100), the operation method comprising:
displaying content including an avatar on a display (130);
displaying, around the avatar, a virtual object management user interface (UI) for managing a virtual object corresponding to an Internet of Things (IoT) apparatus (300);
displaying an activated virtual object management UI, based on a user's input for the virtual object management UI; and
obtaining status information from the IoT apparatus (300) through the communication interface (120), when the virtual object management UI includes a notification UI.
